(19) Europäisches Patentamt
European Patent Office
Office européen des brevets

(11) EP 4 542 965 A1

(12) EUROPEAN PATENT APPLICATION
published in accordance with Art. 153(4) EPC

(43) Date of publication:
23.04.2025 Bulletin 2025/17

(51) International Patent Classification (IPC):
H04L 65/60 (2022.01)

(21) Application number: 23822680.7

(22) Date of filing: 01.03.2023

(52) Cooperative Patent Classification (CPC):
H04N 19/96; H04N 19/593; H04N 19/597;
H04N 19/70

(86) International application number:
PCT/CN2023/079143

(87) International publication number:
WO 2023/241108 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.06.2022 CN 202210690211

(71) Applicant: Tencent Technology (Shenzhen)
Company Limited
Shenzhen, Guangdong 518057 (CN)

(72) Inventor: ZHU, Wenjie
Shenzhen, Guangdong 518057 (CN)

(74) Representative: EP&C
P.O. Box 3241
2280 GE Rijswijk (NL)

(54) **POINT CLOUD ENCODING METHOD, POINT CLOUD DECODING METHOD, AND RELATED DEVICE**

(57) Provided in the embodiments of the present application are a point cloud encoding method, a point cloud decoding method, and a related device. The point cloud encoding method comprises: acquiring point cloud data to be encoded (S401); determining a starting point for each point cloud group (S402); constructing a single-chain prediction tree of each point cloud group on the basis of the starting point of each point cloud group (S403); and according to the single-chain prediction tree of each point cloud group, encoding each point to be encoded in the point cloud data (S404). By using the embodiments of the present application, the encoding efficiency of point cloud data can be improved.

| | |
|---|---|
| Obtain to-be-encoded point cloud data, the point cloud data being divided into L point cloud groups | S401 |
| Determine starting points for each point cloud group | S402 |
| Construct a single-chain predictive tree for each point cloud group based on the starting points of the point cloud group | S403 |
| Encode each to-be-encoded point in the point cloud data based on the single-chain predictive tree of each point cloud group | S404 |

FIG. 6

**Description**

This application claims priority to Chinese Patent Application No. 202210690211.7, filed on June 17, 2022 and entitled "POINT CLOUD ENCODING DECODING METHOD, AND RELATED DEVICES", which is incorporated herein by reference in its entirety.

FIELD OF THE TECHNOLOGY

This application relates to the field of computer technologies, specifically to the encoding and decoding field, and in particular, to a point cloud encoding method, a point cloud decoding method, a point cloud processing apparatus, a computer device, and a computer-readable storage medium.

BACKGROUND OF THE DISCLOSURE

Point cloud data is a set of points that are obtained by capturing data from surfaces of an object by a measuring instrument. Point cloud data is widely applied in aspects such as autonomous driving, high-precision maps, and virtual reality. However, because point cloud data usually includes tens of thousands of points to hundreds of millions of three-dimensional points, it poses severe challenges to storage, processing, transmission, and displaying of data, and it is difficult for both current storage resources and transmission bandwidths to withstand the point cloud data. Therefore, it is essential to encode point cloud data before storing or transmitting the point cloud data.

SUMMARY

Embodiments of this application provide a point cloud encoding method, a point cloud decoding method, and related devices, to construct a predictive tree for point cloud data based on a plurality of starting points, increasing efficiency of encoding the point cloud data.

According to one aspect, an embodiment of this application provides a point cloud encoding method. The method includes:

   obtaining to-be-encoded point cloud data, the point cloud data being divided into L point cloud groups, L being an integer greater than or equal to 1, and each point cloud group including a plurality of to-be-encoded points;

   determining a starting point for each point cloud group, a quantity of the starting points of each point cloud group being greater than or equal to 1;

   constructing a single-chain predictive tree for each point cloud group based on the starting point of the point cloud group; and

   encoding each to-be-encoded point in the point cloud data based on the single-chain predictive tree of each point cloud group.

According to another aspect, an embodiment of this application provides a point cloud decoding method. The method includes:

   obtaining to-be-decoded point cloud data, the point cloud data including a plurality of to-be-decoded points, the to-be-decoded point cloud data being obtained by encoding each to-be-encoded point in to-be-encoded point cloud data by an encoding end based on a single-chain predictive tree of each point cloud group of the point cloud data, the single-chain predictive tree of each point cloud group being constructed based on a starting point of each point cloud group, and a quantity of the starting points of each point cloud group being greater than or equal to 1;

   performing starting point parsing on the point cloud data, to obtain reconstructed geometry information of the starting point of the point cloud data;

   determining a geometry decoding mode for the point cloud data, and performing geometry prediction for each point in the point cloud data based on the geometry decoding mode and the reconstructed geometry information of the starting point, to obtain predicted geometry information of each point in the point cloud data; and

   performing geometry decoding on each point in the point cloud data based on the predicted geometry information of each point in the point cloud data, to determine reconstructed geometry information of each point in the point cloud data.

According to another aspect, an embodiment of this application provides a point cloud encoding apparatus. The apparatus includes:

an obtaining unit, configured to obtain to-be-encoded point cloud data, the point cloud data being divided into L point cloud groups, L being an integer greater than or equal to 1, and each point cloud group including a plurality of to-be-encoded points; and

a processing unit, configured to determine a starting point for each point cloud group, a quantity of the starting points of each point cloud group being greater than or equal to 1;

the processing unit being further configured to construct a single-chain predictive tree for each point cloud group based on the starting point of the point cloud group; and

the processing unit being further configured to encode each to-be-encoded point in the point cloud data based on the single-chain predictive tree of each point cloud group.

According to another aspect, an embodiment of this application provides a point cloud decoding apparatus. The apparatus includes:

an obtaining unit, configured to obtain to-be-decoded point cloud data, the point cloud data including a plurality of to-be-decoded points, the to-be-decoded point cloud data being obtained by encoding each to-be-encoded point in to-be-encoded point cloud data by an encoding end based on a single-chain predictive tree of each point cloud group of the point cloud data, the single-chain predictive tree of each point cloud group being constructed based on a starting point of each point cloud group, and a quantity of the starting points of each point cloud group being greater than or equal to 1; and

a processing unit, configured to perform starting point parsing on the point cloud data, to obtain reconstructed geometry information of the starting point of the point cloud data;

the processing unit being further configured to: determine a geometry decoding mode for the point cloud data, and perform geometry prediction for each point in the point cloud data based on the geometry decoding mode and the reconstructed geometry information of the starting point, to obtain predicted geometry information of each point in the point cloud data; and

the processing unit being further configured to perform geometry decoding on each point in the point cloud data based on the predicted geometry information of each point in the point cloud data, to determine reconstructed geometry information of each point in the point cloud data.

According to another aspect, an embodiment of this application provides a computer device. The computer device includes:

a processor, configured to load and execute a computer program; and

a computer-readable storage medium, the computer-readable storage medium storing a computer program, and the computer program, when being executed by the processor, implementing the point cloud encoding method or the point cloud decoding method.

According to another aspect, this application provides a computer-readable storage medium. The computer-readable storage medium stores a computer program. The computer program is suitable to be loaded and executed by a processor to implement the point cloud encoding method or the point cloud decoding method.

According to another aspect, this application provides a computer program product or a computer program. The computer program product or the computer program includes computer instructions. The computer instructions are stored in a computer-readable storage medium. A processor in an electronic device reads the computer instructions from the computer-readable storage medium. The processor executes the computer instructions, so that the electronic device performs the point cloud encoding method or the point cloud decoding method.

BRIEF DESCRIPTION OF THE DRAWINGS

FIG. 1 is a diagram of a structure of an encoding framework according to an embodiment of this application.

FIG. 2 is a diagram of an encoding structure of an octree according to an embodiment of this application.

FIG. 3 is a diagram of an encoding structure of a multi-chain predictive tree according to an embodiment of this application.

FIG. 4 is a diagram of a structure of a single-chain predictive tree according to an embodiment of this application.

FIG. 5 is a diagram of an architecture of a point cloud encoding and decoding system according to an embodiment of this application.

FIG. 6 is a schematic flowchart of a point cloud encoding method according to an embodiment of this application.

FIG. 7 is a diagram of dividing to-be-encoded point cloud data into groups according to an embodiment of this application.

FIG. 8 is a diagram of selecting a starting point from a plurality of vertices of a point cloud bounding box according to an embodiment of this application.

FIG. 9 is a diagram of a point cloud bounding box according to an embodiment of this application.

FIG. 10 is a diagram of selecting a starting point from a plurality of extremum points in a point cloud group according to an embodiment of this application.

FIG. 11 is a diagram of selecting a starting point based on an arrangement order of to-be-encoded points in a point cloud group according to an embodiment of this application.

FIG. 12 is a diagram of connecting a first branch chain and a second branch chain according to an embodiment of this application.

FIG. 13 is a diagram of constructing branch chains in order of priorities of starting points according to an embodiment of this application.

FIG. 14 is a diagram of performing a plurality of searches with a plurality of starting points as references to construct branch chains according to an embodiment of this application.

FIG. 15 is a diagram of constructing a target predictive tree for entire point cloud data based on single-chain predictive trees of L point cloud groups according to an embodiment of this application.

FIG. 16 is a schematic flowchart of another point cloud encoding method according to an embodiment of this application.

FIG. 17 is a diagram of obtaining predicted geometry information of a to-be-encoded point according to an embodiment of this application.

FIG. 18 is a schematic flowchart of a point cloud decoding method according to an embodiment of this application.

FIG. 19 is a diagram of a structure of a point cloud encoding apparatus according to an embodiment of this application.

FIG. 20 is a diagram of a structure of a point cloud decoding apparatus according to an embodiment of this application.

FIG. 21 is a diagram of a structure of a computer device according to an embodiment of this application.

DESCRIPTION OF EMBODIMENTS

For a clearer understanding of technical solutions provided in embodiments of this application, key terms used in embodiments of this application are first described herein.

I. Point cloud data

Point cloud data may be a set of discrete points that are irregularly distributed in space and that express a spatial structure and a surface attribute of a three-dimensional object or a three-dimensional scene. Point cloud data may include a plurality of points, and each point has geometry information and attribute information. Geometry information may also be referred to as three-dimensional location information. Geometry information of any point may be three-dimensional coordinates (x, y, z) of the point, and may include coordinates of the point with reference to coordinate axes of a three-dimensional coordinate system, that is, an X-coordinate of x, a Y-coordinate of y, and a Z-coordinate of z. Attribute information of any point may include at least one of color information, material information, or laser reflection intensity information (which may also be referred to as reflectivity). Usually, points in point cloud data have the same quantity of types of attribute information. For example, each point in point cloud data may have two types of attribute information: color information and laser reflection intensity information. Alternatively, each point in point cloud data may have three types of attribute information: color information, material information, and laser reflection intensity information. In addition, point cloud data may be classified into different categories according to different classification criteria. For example, point cloud data may be classified into dense point clouds and sparse point clouds based on manners of obtaining point cloud data. For another example, point cloud data may be classified into static point clouds and dynamic point clouds based on timing types of point cloud data.

II. Point cloud compression (PCC)

Point cloud compression is a process of encoding point cloud data to obtain a compressed bit stream (or referred to as an encoded bit stream) of the point cloud data. Point cloud compression may include two main processes: geometry information encoding and attribute information encoding. At present, mainstream point cloud compression technologies may be classified into geometry-based point cloud compression and projection-based point cloud compression for different types of point cloud data. Geometry-based point cloud compression (G-PCC) in moving picture experts group (MPEG) and a point cloud compression standard AVS-PCC in audio video coding standard (AVS) are used as examples for description.

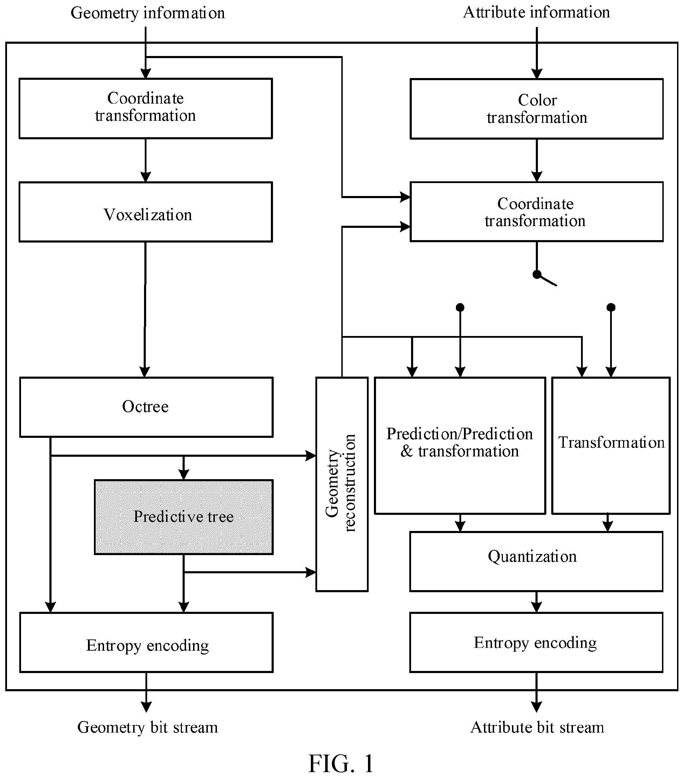

The G-PCC and the AVS-PCC are both developed for static, sparse point clouds, and their encoding frameworks are roughly the same. As shown in FIG. 1, a geometry information encoding process and an attribute information encoding process may be included. In the geometry information encoding process, geometry information of each point in point cloud data is encoded to obtain a geometry bit stream. In the attribute information encoding process, attribute information of each point in the point cloud data is encoded to obtain an attribute bit stream. The geometry bit stream and the attribute bit stream collectively make up a compressed bit stream of the point cloud data.

1. For the geometry information encoding process, refer to the following description for main operations and processing:

(1) Pre-processing: Coordinate transformation and voxelization may be included. Through scaling and translation operations, point cloud data in three-dimensional space is converted into integers, and a minimum geometric location of the point cloud data is moved to a coordinate origin.

(2) Geometry encoding: A plurality of schemes may be included, such as octree geometry encoding, predictive tree geometry encoding, and trisoup geometry encoding. Different schemes may be used for point cloud data under different conditions. The following describes the three schemes mentioned above.

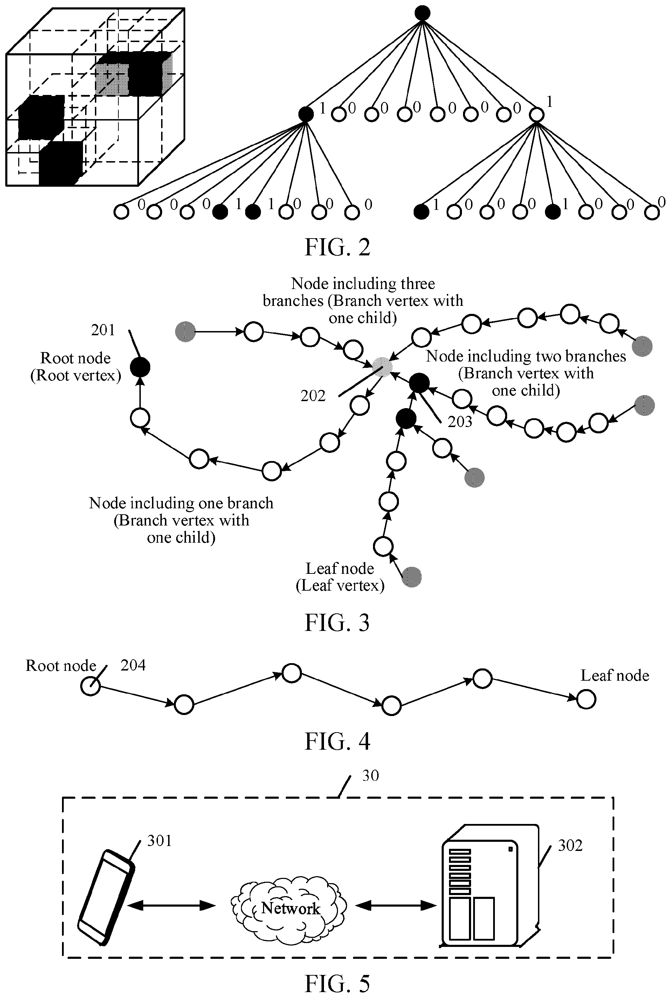

① Octree geometry encoding: An octree is a tree data structure. For point cloud data in 3D space, an octree is obtained by evenly partitioning a preset bounding box level by level, with each node having eight child nodes. By using "1" to indicate that a child node of the octree is occupied and "0" to indicate that a child node of the octree is not occupied, as shown in FIG. 2, occupancy code information is obtained and used as a bit stream of geometry information of a point cloud. The bounding box mentioned above is an algorithm for finding optimal space occupied by a set of discrete points. A basic idea is to approximate a complex geometric object by a geometric object with a slightly larger volume and simple characteristics (referred to as a bounding box).

At present, constructing an octree based on a Morton order is supported, that is, 3D coordinate information (that is, geometry information) of point cloud data is converted into corresponding Morton codes by querying a Morton order table. Then, based on a position of each Morton code, a corresponding point at each level of the octree is obtained. Currently, in the mainstream point cloud compression technologies, point cloud data is represented by an octree that is obtained through partitioning, and different processing procedures are adopted for geometry information and attribute information. The Morton order, also referred to as a Morton curve, is a recursive space partitioning technology, which can well map three-dimensional space to a one-dimensional spatial curve and preserve good locality.

② Predictive tree geometry encoding: Distance relationships between three-dimensional coordinates of points in point cloud data are analyzed; with a specific criterion met, the points are connected one by one to form a single-chain or multi-chain tree structure; residuals are calculated based on coordinates of parent nodes and child nodes that are connected; and encoding is performed based on the residuals, index values that may exist, and a calculation method.

A process of constructing a predictive tree based on a plurality of points included in point cloud data is essentially a process of solving a traveling salesman problem (TSP). The TSP problem is a classic combinatorial optimization problem. The classic TSP may be described as follows: A commodity salesman goes to several cities to promote commodities. The salesman starts from a city, and needs to return to the starting place after traveling through all the cities. How does the salesman select routes to keep the overall journey shortest? From a perspective of a graph theory, the problem is essentially to find a cycle with a minimum weight in a weighted complete undirected graph. Because feasible solutions to the problem are all permutations of all vertices, a combinatorial explosion occurs as a quantity of vertices increases. The TSP problem is an NP-complete problem. Because the TSP problem frequently occurs in fields such as transportation, design of circuits on circuit boards, and logistics and delivery, scholars inside and outside China have conducted extensive research on the problem. In early days, researchers solved the problem by using exact algorithms. Common algorithms include a branch and bound algorithm, a linear programming algorithm, a dynamic programming algorithm, and the like. However, as a scale of the problem increases, exact algorithms cannot solve the problem. Therefore, in later research, scholars inside and outside China mainly use approximation algorithms or heuristic algorithms, mainly including a genetic algorithm, a simulated annealing algorithm, an ant colony algorithm, a tabu search algorithm, a greedy algorithm, a neural network, and the like.

For example, if a TSP is modeled by using a weighted undirected graph, cities are vertices in the graph, roads are edges in the graph, and a distance between two cities is a length of an edge between two corresponding vertices. This is a minimization problem in which a starting point and an ending point are both at a particular vertex and each vertex is visited exactly once. Usually, the model is a complete graph (that is, vertices in each vertex pair are connected by an edge). If no path exists between two cities, the graph may be completed by adding an excessively long edge, without affecting computation of an optimal cycle. In a symmetric TSP problem, a forward path distance and a backward path distance between two cities are equal, so an undirected graph is formed. The symmetry reduces a quantity of solutions by half. In an asymmetric TSP problem, a forward path or a backward path between two cities may be absent, or a forward path distance and a backward path distance are different, so a directed graph is formed. Traffic accidents, one-way streets, a difference between a ticket price of an A-to-B flight and a ticket price of a B-to-A flight, and the like are all examples of the symmetry being broken.

For a diagram of an encoding structure of an MPEG multi-chain predictive tree, refer to FIG. 3. The multi-chain predictive tree uses a point 201 as a starting point, and a plurality of points are connected to the starting point in sequence. At a point 202, there appear three branch chains with the point 202 as a starting point. From left to right and from top to bottom, the three branch chains include a first branch chain, a second branch chain, and a third branch chain. The first branch chain and the second branch chain are both single chains. At a point 203 on the third branch chain, there appear two branch chains with the point 203 as a starting point. For a diagram of an encoding structure of an AVS single-chain predictive tree, refer to FIG. 4. The single-chain predictive tree starts from a starting point 204. All points included in point cloud data are connected to form a single-chain predictive tree. No branch chain exists in the single-chain predictive tree.

③ Trisoup geometry encoding: After point cloud blocks are obtained through partitioning, intersection points between point cloud surfaces and edges of the blocks are determined, and triangles are constructed. Geometry information is compressed by encoding locations of the intersection points. Point cloud blocks are obtained by partitioning three-dimensional space in which points in point cloud data reside. Each point cloud block includes a portion of the points in the point cloud data.

(3) Geometry quantization: Quantization fineness is usually determined by a quantizer parameter (QP). A larger QP value indicates that coefficients in a wider value range are to be quantized to the same output; therefore, this usually results in a larger distortion and a lower bit rate. On the contrary, a smaller QP value indicates that coefficients in a narrower value range are to be quantized to the same output; therefore, this usually results in a smaller distortion and a higher bit rate. In point cloud compression, quantization is performed directly on coordinate information of points.

(4) Geometry entropy encoding: Statistical compression and encoding are performed on occupancy code information of an octree, and finally a binary (0 or 1) compressed bit stream is outputted. Statistical encoding is a lossless encoding scheme, which can effectively reduce a bit rate required for representing the same signal. A common statistical encoding scheme is content adaptive binary arithmetic coding (CABAC).

2. For the attribute information encoding process, refer to the following description for main operations and processing:

(1) Attribute recoloring: In a case of lossy encoding, after the geometry information is encoded, an encoding end needs to perform decoding and reconstruct the geometry information, that is, recover the geometry information of each point in the point cloud data. The original point cloud data is searched for the attribute information of one or more corresponding neighboring points, and the attribute information is used as attribute information of the reconstructed point.

(2) Attribute transform encoding: Distance relationships between the geometry information are analyzed, real attribute information corresponding to a specific quantity of points is transformed into transform coefficients by a transform matrix, and the transform coefficients are encoded. There are three attribute transform encoding schemes: attribute predicting transform encoding, attribute lifting transform encoding, and region adaptive hierarchical transform encoding. The following describes the three schemes in detail.

① Attribute predicting transform encoding: A subset of points is selected based on distances. Point cloud data is partitioned into a plurality of different levels of detail (LoDs), to implement a coarse-to-fine point cloud representation. Bottom-up prediction may be implemented between adjacent levels. To be specific, attribute information of a point introduced to a fine level is predicted based on a neighboring point at a coarse level, to obtain a corresponding residual signal. Points at a lowest level are encoded as reference information.

② Attribute lifting transform encoding: Based on adjacent LoD prediction, a policy of updating weights for neighboring points is introduced. Finally, a predictive attribute value of each point is obtained, and a corresponding residual signal is obtained.

③ Region adaptive hierarchical transform (RAHT) encoding: After RAHT is performed on attribute information, signals are transformed to a transform domain, and transform results are referred to as transform coefficients.

(3) Attribute information quantization: Quantization fineness is usually determined by a quantizer parameter. In attribute predictive encoding, entropy coding is performed on quantized prediction residual information. In attribute transform encoding and attribute predicting transform encoding, entropy coding is performed on quantized transform coefficients.

(4) Attribute entropy coding: Runlength coding and arithmetic coding are usually performed on the quantized prediction residual information or the quantized transform coefficients, to implement final compression. Likewise, corresponding information such as an encoding scheme and a quantizer parameter is also encoded by an entropy encoder.

III. Point cloud decoding

Point cloud decoding is a process of decoding a compressed bit stream of point cloud data to reconstruct the point cloud data. Specifically, point cloud decoding may be a process of reconstructing geometry information and attribute information of each point in the point cloud data based on a geometry bit stream and an attribute bit stream in the compressed bit stream. After the compressed bit stream of the point cloud data is obtained at a decoding end, for the geometry bit stream, entropy decoding is first performed to obtain information about various schemes, quantized geometry information, and quantized attribute information. Then, the geometry information is dequantized to obtain reconstructed location information (that is, geometry information) of 3-dimensional (3D) points. For the attribute bit stream, entropy decoding is first performed to obtain quantized prediction residual information or a quantized transform coefficient of each point in the point cloud data. Then, the quantized prediction residual information is dequantized to obtain reconstructed residual information. The quantized transform coefficients are dequantized to obtain reconstructed transform coefficients. Inverse transform is performed on the reconstructed transform coefficients to obtain reconstructed residual information. The attribute information of each point in the point cloud data can be reconstructed based on the reconstructed residual information of each point in the point cloud data. The reconstructed attribute information of the points in the point cloud data is sequentially mapped to the reconstructed geometry information on a one-to-one basis, to obtain reconstructed point cloud data.

Based on the related descriptions of point cloud data, point cloud compression, and point cloud decoding, an embodiment of this application provides a point cloud encoding and decoding system. As shown in FIG. 5, a point cloud encoding and decoding system 30 may include an encoding device 301 and a decoding device 302. The encoding device 301 or the decoding device 302 may be a terminal or a server. A communication connection may be established between the encoding device 301 and the decoding device 302. A terminal may be a smartphone, a tablet computer, a notebook computer, a desktop computer, a smart speaker, a smartwatch, a vehicle-mounted terminal, a smart television (TV), or the like, but is not limited thereto. A server may be a standalone physical server, or may be a server cluster or a distributed system that includes a plurality of physical servers, or may be a cloud server that provides basic cloud computing services such as cloud services, cloud databases, cloud computing, cloud functions, cloud storage, network services, cloud communication, middleware services, domain name services, security services, content delivery networks (CDNs), big data, and artificial intelligence platforms. For ease of description, in embodiments of this application, an encoding device and an encoding end are not distinguished from each other, and likewise, a decoding device and a decoding end are not distinguished from each other.

Based on the point cloud encoding and decoding system shown in FIG. 5, an embodiment of this application provides a predictive tree encoding and decoding mode that is based on a plurality of starting points. In the predictive tree encoding and decoding mode, a predictive tree encoding structure based on a plurality of starting points is specifically provided and constructed, and encoding and decoding are performed on corresponding residuals of geometry information. The predictive tree encoding and decoding mode includes a point cloud encoding scheme and a point cloud decoding mode. A specific implementation procedure of the predictive tree encoding and decoding mode may include but is not limited to the following operations:

(1) Obtain point cloud data.

Point cloud data may be obtained in two manners: scene capture and generation by a device. Obtaining point cloud data through scene capture may be as follows: A capture device or a measuring instrument captures a visual scene in the real world to obtain point cloud data. The capture device may be a hardware component disposed in the encoding device 301. For example, a capture device is a camera or sensor of a terminal. The capture device may alternatively be a hardware apparatus connected to the encoding device 301, for example, a camera connected to a server. The capture device is configured to provide the encoding device 301 with a service of obtaining point cloud data. The capture device may include but is not limited to any one of a camera device, a sensing device, or a scan device. A camera device may include an ordinary camera, a stereo camera, a light field camera, or the like. A sensing device may include a laser device, a radar device, or the like. A scan device may include a three-dimensional laser scan device or the like. Generating point cloud data by a device may be as follows: A virtual object production device generates point cloud data based on a virtual object (for example, a virtual three-dimensional object or a virtual three-dimensional scene obtained through three-dimensional modeling). A specific source of the point cloud data is not limited in this embodiment of this application.

The point cloud data may include at least real geometry information of to-be-encoded points. The real geometry information of the to-be-encoded points in the point cloud data may be information about real spatial locations of the to-be-encoded points in three-dimensional space. Specifically, the information is coordinates of the to-be-encoded points in a three-dimensional coordinate system in the three-dimensional space. For example, if coordinate information of a to-be-encoded point in a three-dimensional coordinate system in three-dimensional space is $(x, y, z)$, real geometry information of the to-be-encoded point is $(x, y, z)$. Therefore, real geometry information of a plurality of to-be-encoded points can show spatial positional relationships between the plurality of to-be-encoded points in the three-dimensional space.

(2) Encode the point cloud data to obtain an encoded bit stream.

After the capture device obtains the point cloud data, the encoding device 301 may divide the to-be-encoded point cloud data into L point cloud groups, where L is an integer greater than or equal to 1. Then, the encoding device 301 creates, in units of point cloud groups, a single-chain predictive tree for each point cloud group. The single-chain predictive trees of the L point cloud groups are connected in an order in which the L point cloud groups are obtained through division, to obtain a target predictive tree of the point cloud data. Compared with constructing a predictive tree for entire point cloud data, constructing a single-chain predictive tree for each point cloud group can help reduce, to some extent, time required for constructing a predictive tree for point cloud data, increasing efficiency of constructing the predictive tree. After that, the target predictive tree of the point cloud data may be encoded, to obtain encoded point cloud data and further obtain the encoded bit stream, and the encoded bit stream is transmitted to the decoding device 302. In the process of constructing a single-chain predictive tree for each point cloud group, a plurality of starting points may be first selected for the point cloud group, and the plurality of starting points each may serve as a search starting point to obtain a branch chain corresponding to each starting point. Finally, the plurality of branch chains corresponding to the plurality of starting points are connected to obtain the single-chain predictive tree of the point cloud group. In the manner of constructing a single-chain predictive tree based on a plurality of starting points, an efficient predictive tree structure can be implemented, associations between adjacent unordered points in the three-dimensional space can be improved, and efficiency of encoding the point cloud data can be increased.

(3) Decode the to-be-decoded point cloud data to reconstruct the point cloud data.

After receiving the encoded bit stream, the decoding device 302 may obtain the to-be-decoded point cloud data (that is, the encoded point cloud data) from the encoded bit stream. Then, starting point parsing may be performed on the to-be-decoded point cloud data, to determine reconstructed geometry information of the starting point of the point cloud data. The starting point may be a to-be-decoded point that is in the first position in the point cloud data. Next, geometry prediction is performed for each to-be-decoded point in the point cloud data based on a geometry decoding mode determined for the point cloud data and the reconstructed geometry information of the starting point, to obtain predicted geometry information of each point. Geometry decoding is then performed on each point to obtain reconstructed residual information of each point. Therefore, reconstructed geometry information of each point is determined based on the predicted geometry information and reconstructed residual information of each point. In this way, the point cloud data is reconstructed at the decoding end. In the foregoing process, starting point parsing is performed on the point cloud data. Therefore, the reconstructed geometry information of the starting point of the point cloud data is directly obtained. In other words, the reconstructed geometry information of the starting point is determined quickly. In addition, the reconstructed residual information of each point is finally obtained by performing geometry decoding on each to-be-decoded point in the point cloud data. Therefore, with this manner compared with direct reconstruction of the reconstructed geometry information of each point, an amount of data to be decoded can be reduced during geometry information decoding, because residual data is of a small amount. This further improves efficiency of decoding the point cloud data.

The point cloud encoding and decoding system described in this embodiment of this application is intended to describe the technical solutions in embodiments of this application more clearly, but does not constitute a limitation on the technical solutions provided in embodiments of this application. A person of ordinary skill in the art may know that the technical solutions provided in embodiments of this application are also applicable to similar technical problems as a system architecture evolves and a new service scenario emerges.

Based on the related description of the predictive tree encoding and decoding mode, the following separately describes a point cloud encoding method and a point cloud decoding method in embodiments of this application with reference to the accompanying drawings.

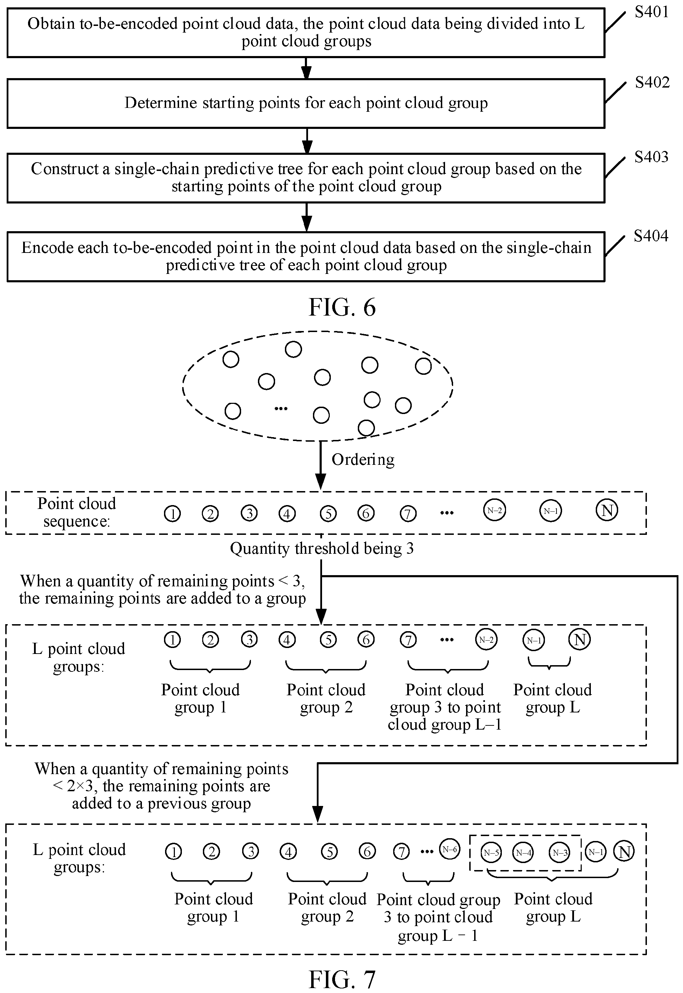

An embodiment of this application provides a point cloud encoding method. For a specific implementation procedure of the point cloud encoding method, refer to FIG. 6. The point cloud encoding method may be performed by the encoding device 301 in the point cloud encoding and decoding system 30 shown in FIG. 5. As shown in FIG. 6, the point cloud encoding method may include the following operations S401 to S404:

S401: Obtain to-be-encoded point cloud data, the point cloud data being divided into L point cloud groups, and L being an integer greater than or equal to 1.

The to-be-encoded point cloud data may be a set of points obtained by performing digital capture on surfaces of a real three-dimensional object. Point cloud data is a set in units of points. Each point included in point cloud data has geometry information and attribute information, which may be configured for representing surface characteristics of a real three-dimensional object. When a target object (for example, any object) has a requirement of analyzing surface characteristics of a surface of a three-dimensional object or transmitting surface characteristics of a surface of an object, a capture device may be used to scan the surface of the three-dimensional object to obtain to-be-encoded point cloud data. The to-be-encoded point cloud data includes a plurality of to-be-encoded points captured from the surface of the three-dimensional object.

During specific implementation, the to-be-encoded point cloud data may be divided, that is, the plurality of to-be-encoded points included in the point cloud data are divided into different point cloud groups. Therefore, the point cloud groups may include the same quantity or different quantities of to-be-encoded points. The following describes, with reference to FIG. 7, an implementation process of dividing the to-be-encoded point cloud data into the L point cloud groups.

As shown in FIG. 7, it is assumed that point cloud data includes N to-be-encoded points, where N is an integer greater than 1. The N to-be-encoded points included in the to-be-encoded point cloud data may be ordered first to obtain a point cloud sequence. A point cloud sequence may be obtained in an order that includes but is not limited to a Morton order or an original order. ① A Morton order may be obtained by ordering Morton codes based on geometry information of to-be-encoded points included in point cloud data. Specifically, 3D coordinate information (for example, the geometry information mentioned above) of the to-be-encoded points included in the point cloud data is converted, by querying a Morton order table, into Morton codes corresponding to the to-be-encoded points, and then the Morton codes are ordered to obtain the Morton order corresponding to the point cloud data. ② An original order may be an order in which to-be-encoded points are inputted when to-be-encoded point cloud data is inputted to an encoding device. In this case, the original order may include an order in which points are scanned when an object surface is scanned, or may include an order that is of points in point cloud data and that is customized by a target object (for example, a coding person). A specific manner of determining an original order is not limited in this embodiment of this application.

Then, an encoding device obtains a quantity threshold. The quantity threshold may be customized according to a data division requirement of the target object. Finally, based on an arrangement order of the to-be-encoded points in the point cloud sequence, a target quantity of adjacent points are added to a point cloud group to obtain the L point cloud groups. The quantity threshold includes the target quantity, and may be configured to indicate adding the target quantity of adjacent to-be-encoded points in the point cloud sequence to a point cloud group. For example, if a quantity threshold is 100, a target quantity included in the quantity threshold is 100. Based on an arrangement order of to-be-encoded points in a point cloud sequence, every 100 adj acent to-be-encoded points may be added to a point cloud group to obtain L point cloud groups.

A quantity of the to-be-encoded points included in the point cloud sequence may not be an integer multiple of the target quantity. For example, a quantity of to-be-encoded points included in a point cloud sequence is 11, and a target quantity is 3. In this case, a relationship between the quantity of the to-be-encoded points and the target quantity is $11=3\times3+2$. To be specific, after every three adjacent points are added to a cloud point group based on an arrangement order of the points in the point cloud sequence, there are still two points remaining in the point cloud sequence that are not added to a point cloud group. In this case, this embodiment of this application provides two optional manners to add a remaining point to a point cloud group.

In some embodiments, when an $(L-1)^{th}$ point cloud group is obtained through division, if a quantity of ungrouped points remaining in the point cloud sequence is less than the target quantity, the remaining ungrouped points are added to an $L^{th}$ point cloud group. In this case, a quantity of to-be-encoded points included in the $L^{th}$ point cloud group is the quantity of the remaining ungrouped points that is less than the target quantity. In other words, when the quantity of the ungrouped points remaining in the point cloud sequence is less than the quantity threshold, the point cloud group made up of the remaining ungrouped points may be used as the last point cloud group. As shown in FIG. 7, when an $(L-1)^{th}$ point cloud group is obtained through division, there are two ungrouped points remaining in the point cloud sequence. Then, the two remaining points are added to an $L^{th}$ point cloud group. In this case, the $L^{th}$ point cloud group includes two to-be-encoded points.

In some embodiments, when an $L^{th}$ point cloud group is obtained through division, if a quantity of ungrouped points remaining in the point cloud sequence is less than the target quantity, the remaining ungrouped points are added to the $L^{th}$ point cloud group. In this case, a quantity of to-be-encoded points included in the $L^{th}$ point cloud group is as follows: the target quantity + the quantity of the remaining ungrouped points that is less than the target quantity. In other words, when the quantity of the ungrouped points remaining in the point cloud sequence is less than the quantity threshold, the remaining ungrouped points may be added to the last point cloud group obtained through division. As shown in FIG. 7, when an $L^{th}$ point cloud group is obtained through division, there are two ungrouped points remaining in the point cloud sequence. Then, the two remaining points are added to the $L^{th}$ point cloud group. In this case, the $L^{th}$ point cloud group includes five to-be-encoded points.

S402: Determine starting points for each point cloud group, a quantity of the starting points of each point cloud group being greater than 1.

A starting point of a point cloud group is a search starting point used for constructing a single-chain predictive tree for the point cloud group. A search starting point may be simply understood as a head point on a chain, that is, a point in the first position (or referred to as a head position) on the chain (that is, a path obtained by connecting a plurality of points in sequence). When a specific point is determined as a search starting point, it is determined to search for, with the point as a reference, a to-be-encoded point in a point cloud group. The to-be-encoded point is connected to a branch chain that starts with the search starting point. In this way, the branch chain with a starting point as the search starting point is formed. Further, when a quantity of starting points of a point cloud group is greater than 1, each starting point may be used as a search starting point, to obtain a corresponding branch chain of each starting point through search. Then, a predictive tree of the point cloud group is obtained by connecting the branch chains. In a manner of determining a plurality of starting points for each point cloud group to construct a plurality of branch chains and finally constructing a predictive tree for the point cloud group based on the plurality of branch chains, the branch chains are synchronously constructed based on the starting points. Compared with constructing a predictive tree for a point cloud group based on a single starting point, the process of synchronously constructing the branch chains based on the starting points can help reduce, to some extent, time required for constructing a predictive tree. This increases efficiency of constructing the predictive tree and implements an efficient predictive tree structure. Alternatively, when a quantity of starting points of a point cloud group is greater than 1, a plurality of searches may be performed with the starting points as references, to construct a single-chain predictive tree. To be specific, points in the point cloud group are connected, based on geometric distance relationships between the points and each starting point, to form a single-chain predictive tree. This can improve associations between unordered points in the point cloud group and each starting point, implementing an efficient single-chain predictive tree structure.

The following describes several manners of determining a starting point of a point cloud group provided in this embodiment of this application.

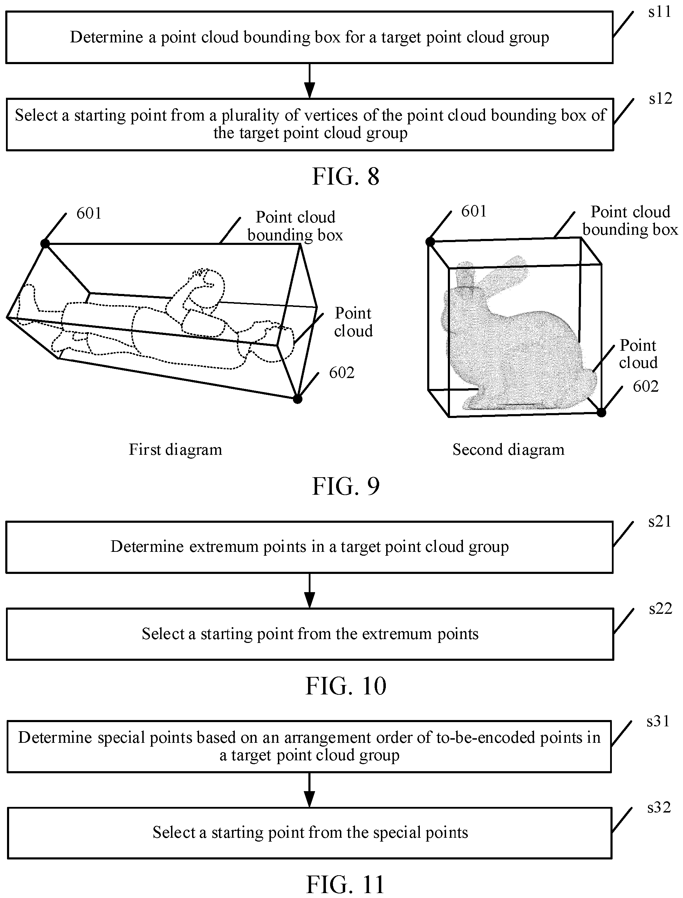

(1) Selecting a starting point from a plurality of vertices of a point cloud bounding box of a point cloud group. It is assumed that any one of the L point cloud groups is a target point cloud group. As shown in FIG. 8, an implementation process of selecting a starting point for the target point cloud group may include operations s11 and s12.

s11: Determine a point cloud bounding box for the target point cloud group. In consideration that the target point cloud group is obtained by dividing entire point cloud data, the point cloud bounding box of the target point cloud group may be a bounding box of octree nodes. The point cloud bounding box of the target point cloud group includes a three-dimensional spatial body that encompasses all points in the target point cloud group, such as a smallest cuboid, a smallest cube, or a smallest polyhedron (for example, a decahedron). A process of constructing the point cloud bounding box of the target point cloud group may include the following:

First, determine an origin of the point cloud bounding box of the target point cloud group based on real geometry information of to-be-encoded points in the target point cloud group. It is assumed that floating-point coordinate information of a $k^{th}$ point in the target point cloud group is expressed as $(x^k, y^k, z^k)$. k is a quantity of the to-be-encoded points in the target point cloud group, and k=0, 1, 2, ..., k-1. For example, when k=2, coordinate information of the point is expressed as $(x^2, y^2, z^2)$. In this case, the determining an origin of the point cloud bounding box of the target point cloud group based on real geometry information of points in the target point cloud group includes ① and ②.

① Determine a coordinate point $(x^{min}, y^{min}, z^{min})$ with a minimum value in each of an x-direction, a y-direction, and a z-direction based on the real geometry information of the points in the target point cloud group. $x^{min}$ is a minimum of values of the to-be-encoded points in the target point cloud group in the x-direction. $y^{min}$ is a minimum of values of the to-be-encoded points in the target point cloud group in the y-direction. $z^{min}$ is a minimum of values of the to-be-encoded points in the target point cloud group in the z-direction. Formulas for calculating $x^{min}$, $y^{min}$, and $z^{min}$ are as follows, respectively:

$$x^{min} = \min\left(x^0, x^1, ..., x^{k-1}\right); \quad y^{min} = \min\left(y^0, y^1, ..., y^{k-1}\right); \quad z^{min} = \min\left(z^0, z^1, ..., z^{k-1}\right)$$

In the preceding formulas, $\min(s^0, s^1, ..., s^{k-1})$ is a function for finding a minimum value, and means finding a minimum value from current inputs.

② Calculate the origin $(x^{origin}, y^{origin}, z^{origin})$ of the point cloud bounding box of the target point cloud group based on the coordinate point $(x^{min}, y^{min}, z^{min})$ with the minimum values. The origin coordinates of $x^{origin}$, $y^{origin}$, and $z^{origin}$ may be calculated by using the following calculation formulas, respectively:

$$x^{origin} = int\left(floor\left(x^{min}\right)\right); \quad y^{origin} = int\left(floor\left(y^{min}\right)\right); \quad z^{origin} = int\left(floor\left(z^{min}\right)\right)$$

The int(s) function and the floor(s) function are both rounding functions. A rounding principle of the int(s) function is rounding a number down to a nearest integer, and a largest integer less than or equal to s may be returned. For example, int(7.3)=7. The rounding function floor(s) may return a value that is less than or equal to s and that is a largest multiple of a specified base. For example, floor(23,3) indicates that a value of 21 that is less than or equal to 23 and that is a largest integer multiple of 3 needs to be returned.

Then, calculate a dimension of the point cloud bounding box in each direction in a three-dimensional coordinate system based on the origin of the point cloud bounding box and the real geometry information of the to-be-encoded points in the target point cloud group, to determine the point cloud bounding box of the target point cloud group. The dimensions of the point cloud bounding box in the x-direction, the y-direction, and the z-direction may be calculated by using the following calculation formulas, respectively:

BoudingBoxSize$_x$ = int($x^{max}$ - $x^{origin}$) + 1; BoudingBoxSize$_y$ = int($y^{max}$ - $y^{origin}$) + **1;** BoudingBoxSize$_z$ = int($z^{max}$ - $z^{origin}$) + 1

In the preceding formulas, the int(s) function is a rounding-down function. For a related description of the int(s) function, refer to the foregoing related description. Details are not described herein again. A coordinate point $(x^{max}, y^{max}, z^{max})$ is a point with a maximum value in each of the x-direction, the y-direction, and the z-direction. $x^{max}$ is a maximum of values of the to-be-encoded points in the target point cloud group in the x-direction. $y^{max}$ is a maximum of values of the to-be-encoded points in the target point cloud group in the y-direction. $z^{max}$ is a maximum of values of the to-be-encoded points in the target point cloud group in the z-direction. Formulas for calculating $x^{max}$, $y^{max}$, and $z^{max}$ are as follows, respectively:

$$x^{max} = \max(x^0, x^1, ..., x^{k-1}); \quad y^{max} = \max(y^0, y^1, ..., y^{k-1}); \quad z^{max} = \max(z^0, z^1, ..., z^{k-1})$$

In the preceding formulas, $\max(s^0, s^1, ..., s^{k-1})$ is a function for finding a maximum value, and means finding a maximum value from current inputs.

In conclusion, the point cloud bounding box of the target point cloud group may be obtained based on the origin of the point cloud bounding box and the dimensions of the point cloud bounding box in the x-direction, the y-direction, and the z-direction that are obtained through calculation. As mentioned above, a basic idea of a bounding box is to approximate a complex geometric object by a geometric object with a slightly larger volume and simple characteristics (referred to as a bounding box). In this embodiment of this application, the point cloud bounding box of the target point cloud group is a smallest cuboid that may be configured to encompass all the to-be-encoded points in the target point cloud group. For examples of a bounding box that encompasses a geometric object, refer to FIG. 9. Three-dimensional space areas occupied by the bounding boxes encompass complete geometric objects. In a first diagram shown in FIG. 9, the geometric object encompassed by the point cloud bounding box is an object holding a basketball in hands. In a second diagram shown in FIG. 9, the geometric object encompassed by the point cloud bounding box is a rabbit.

s12: Select P1 starting points from a plurality of vertices of the point cloud bounding box of the target point cloud group according to a selection rule, P1 being greater than or equal to 1. The selection rule may include but is not limited to performing selection randomly, performing selection based on geometric distance relationships between vertices, and performing selection in a preset direction. The performing selection randomly means randomly selecting P1 vertices from a plurality of vertices as starting points. The performing selection based on geometric distance relationships between vertices means using P1 vertices with a longest geometric distance in between as starting points based on geometric distance relationships between vertices. The performing selection in a preset direction means selecting P1 starting points in the x-direction, the y-direction, and/or the z-direction. Still with reference to FIG. 9, each point cloud bounding box is a cuboid, and each cuboid has eight vertices. Based on a requirement that vertices with a longest geometric distance in between are selected, a vertex 601 and a vertex 602 may be selected as needed from the eight vertices as starting points of a target point cloud group. In this case, the selected vertex 601 and vertex 602 are not to-be-encoded points in the target point cloud group, that is, the vertex 601 and the vertex 602 are points that do not belong to the target point cloud group.

(2) Selecting a starting point from a plurality of first special points in a point cloud group. It is assumed that any one of the L point cloud groups is a target point cloud group. As shown in FIG. 10, an implementation process of selecting a starting point for the target point cloud group may include operations s21 and s22.

s21: Determine first special points in the target point cloud group. The first special points may be a plurality of points that are in the target point cloud group and whose geometric distances are greater than a distance threshold. For example, first special points include extremum points and median points. Extremum points include maximum points and minimum points in various directions (for example, an x-direction, a y-direction, and a z-direction). A median point may include a point in a middle position among a plurality of points that are arranged in order in a target point cloud group. Specifically, coordinate information of the to-be-encoded points in the target point cloud group in the x-direction, the y-direction, and the z-direction may be obtained. Then, the coordinate information of the to-be-encoded points in each direction may be compared to determine extremum points in the plurality of to-be-encoded points in each direction. For example, a minimum point in a plurality of to-be-encoded points in an x-direction is selected as a first special point. In this case, a value of the minimum point in the x-direction is a minimum, but values in the y-direction and the z-direction are not necessarily minimums. For another example, the minimum point ($x^{min}$, $y^{min}$, $z^{min}$) with a minimum value in each of the x-direction, the y-direction, and the z-direction described above is selected as a first special point; and the maximum point ($x^{max}$, $y^{max}$, $z^{max}$) with a maximum value in each of the x-direction, the y-direction, and the z-direction described above is selected as a first special point.

s22: Select P2 starting points from the maximum points, the minimum points, and the median points, P2 being greater than or equal to 1. For example, a minimum point may be selected from the maximum points and the minimum points as a starting point of the target point cloud group, or both a maximum point and a minimum point are selected as starting points of the target point cloud group, or the like. The maximum points and the minimum points that are determined based on real geometry information of the to-be-encoded points in the target point cloud group may be to-be-encoded points included in the target point cloud group, or may be points that do not belong to the target point cloud group.

(3) Selecting a starting point based on an arrangement order of to-be-encoded points in a point cloud group. As described above, the point cloud groups are obtained through division that is performed based on the arrangement order of the to-be-encoded points in the point cloud sequence. Therefore, a plurality of to-be-encoded points included in a point cloud group are also arranged in order. It is assumed that any one of the L point cloud groups is a target point cloud group. As shown in FIG. 11, an implementation process of selecting a starting point for the target point cloud group may include operations s31 and s32.

s31: Determine one or more second special points based on an arrangement order of to-be-encoded points in the target point cloud group, the second special point including at least one of a head point in the arrangement order and a tail point in the arrangement order. Certainly, the second special point in the target point cloud group may alternatively be a middle point that helps to increase encoding efficiency. A specific type of the second special point is not limited in this embodiment of this application, provided that a starting point that helps to increase encoding efficiency is selected.

s32: Select P3 starting points from the one or more second special points, P3 being greater than or equal to 1. For example, it is assumed that to-be-encoded points included in a target point cloud group are arranged in the following order: a point 1 → a point 2 → a point 3 → ... → a point 10. In this case, a starting point in the arrangement order, that is, a head to-be-encoded point in the arrangement order, is determined as the point 1; and an ending point in the arrangement order, that is, a tail to-be-encoded point in the arrangement order, is determined as the point 10. The point 1 that is the starting point in the arrangement order in the target point cloud group may be selected as a starting point of the target point cloud group, or the point 10 that is the ending point in the arrangement order in the target point cloud group may be selected as a starting point of the target point cloud group.

Based on the foregoing description, the following points ① to ⑤ need to be specifically explained.

① Selecting a starting point is not limited to only one of the foregoing implementations in this embodiment of this application. For example, a starting point may be selected from a plurality of vertices of a point cloud bounding box of a target point cloud group, and/or a starting point may be selected from extremum points in a target point cloud group, and/or a starting point may be selected based on an arrangement order of a plurality of to-be-encoded points in a target point cloud group. For example, a lower-left vertex of a point cloud bounding box that is of a target point cloud group and that is obtained through space partitioning (for example, a process of determining a point cloud bounding box of a point cloud group) is selected as a starting point. In this case, the starting point does not belong to the target point cloud group. Then, an ending point in an arrangement order of a plurality of to-be-encoded points is selected as a starting point. In this case, the starting point belongs to the target point cloud group. A starting point selected for a target point cloud group may be a to-be-encoded point that belongs to the target point cloud group, or may be a point that does not belong to the target point cloud group.

② Selecting a starting point based on a geometric positional relationship is also supported in this embodiment of this application. Specifically, a first starting point may be determined for the target point cloud group first. The first starting point may be determined in any one of the three starting point selection manners mentioned above. For example, a first starting point may be determined based on a plurality of vertices of a point cloud bounding box of a target point cloud group, or determined from a plurality of extremum points in a target point cloud group, or determined based on an arrangement order of to-be-encoded points in a target point cloud group. Then, a starting point is selected from points in the target point cloud group based on a geometric positional relationship between the first starting point and each point in the target point cloud group. The geometric positional relationship herein may be a geometric distance relationship between a starting point and each point. If a geometric distance between a starting point and any point is longer than geometric distances between the starting point and other points, a geometric distance relationship between the starting point and the any point is as follows: The any point is a point farthest from the any starting point. For example, after a first starting point of a target point cloud group is determined, a geometric distance between the first starting point and each point in the target point cloud group may be determined. Then, based on the geometric distances, a point with a longest geometric distance from the first starting point is selected from the points in the target point cloud group, as a second starting point. Further, if a third starting point needs to be selected, a point with longer geometric distances from both the first starting point and the second starting point may be selected from points remaining in the target point cloud group, as the third starting point. Similar operations may be performed until P4 starting points are selected, where P4 is greater than or equal to 1.

③ The following is also supported in this embodiment of this application: Selecting starting points for some of the L point cloud groups based on the foregoing several implementations (for example, based on a point cloud bounding box, from a plurality of first special points in a point cloud group, based on an arrangement order in a point cloud group, or based on a positional relationship between a starting point and each point in a point cloud group). Then, based on the point cloud groups for which the starting points are selected, a starting point is determined for a point cloud group that is of the L point cloud groups and for which no starting point is selected. For example, the L point cloud groups include an $m^{th}$ point cloud group and an $(m+1)^{th}$ point cloud group. In this case, one or more starting points may be selected for the $m^{th}$ point cloud group based on the foregoing several implementations. If one or more starting points are already selected for the $m^{th}$ point cloud group, a starting point may be selected from the one or more starting points of the $m^{th}$ point cloud group according to a screening rule for the $(m+1)^{th}$ point cloud group. The screening rule may include but is not limited to the following: performing selection randomly, or selecting a starting point with a lowest priority from the one or more starting points of the $m^{th}$ point cloud group. Certainly, the starting point of the $(m+1)^{th}$ point cloud group may alternatively include a starting point that is determined based on the foregoing several implementations, in addition to the starting point of the $m^{th}$ point cloud group.

For example, if one or more starting points are already selected for the m^{th} point cloud group, a single-chain predictive tree may be constructed for the m^{th} point cloud group based on the one or more starting points. Then, a tail point of the single-chain predictive tree of the m^{th} point cloud group (that is, a starting point with a lowest priority among the one or more starting points of the m^{th} point cloud group) may be used as a starting point of the (m+1)^{th} point cloud group.

④ When a starting point is actually selected for a target point cloud group, a starting point that helps to increase encoding efficiency may be selected. For example, if encoding efficiency corresponding to a case in which a lower-left vertex of a point cloud bounding box of a target point cloud group is selected as a starting point and a predictive tree is constructed based on the lower-left vertex is higher than encoding efficiency corresponding to a case in which a lower-right vertex of the point cloud bounding box of the target point cloud group is selected as a starting point and a predictive tree is constructed based on the lower-right vertex, the lower-left vertex of the point cloud bounding box is preferentially selected as a starting point of the target point cloud group.

⑤ After a starting point is selected, a priority may further be set for the starting point. For example, the same priority or different priorities are set for a plurality of starting points. For example, in descending order of priorities, starting points may be referred to as a first starting point, a second starting point, a third starting point, and the like, respectively. By setting priorities for starting points, the following order may be defined in advance: an order in which points are selected based on the starting points when a predictive tree is subsequently constructed for a target point cloud group based on the plurality of starting points. For example, a lower-left vertex of a point cloud bounding box that is of a target point cloud group and that is obtained through space partitioning is selected as a first starting point, and an ending point in an arrangement order of a plurality of to-be-encoded points is selected as a second starting point. Later, a point may be selected first based on the first starting point and connected to the first starting point, and then a point may be selected based on the second starting point and connected to the second starting point.

S403: Construct a single-chain predictive tree for each point cloud group based on the starting points of the point cloud group.

By dividing entire point cloud data, the entire point cloud data may be divided into a plurality of point cloud groups, so that single-chain predictive trees can be synchronously constructed for the point cloud groups in units of point cloud groups. Compared with constructing a predictive tree for entire point cloud data, this helps reduce, to some extent, time required for constructing a predictive tree, increasing efficiency of constructing the predictive tree. The following describes, by using an example, an implementation process of constructing a single-chain predictive tree. In this example, any one of the L point cloud groups obtained by dividing the point cloud data is a target point cloud group, starting points of the target point cloud group include at least a first starting point and a second starting point, and a priority of the first starting point is higher than a priority of the second starting point.

First, the encoding device determines points other than the starting points in the target point cloud group as candidate points, and adds the candidate points to a set of alternative points. For example, to-be-encoded points in a target point cloud group include a point 1, a point 2, a point 3, a point 4, and a point 5. If starting points of the target point cloud group include a first starting point and a second starting point, the first starting point is a to-be-encoded point in the target point cloud group (for example, the point 1), and the second starting point is not a to-be-encoded point in the target point cloud group (for example, a point 6), the to-be-encoded points other than the first starting point (for example, the point 1) in the target point cloud group may be determined as candidate points and added to a set of alternative points. In this case, the set of alternative points is [the point 2, the point 3, the point 4, the point 5]. Next, the encoding device constructs the single-chain predictive tree for the target point cloud group based on the set of alternative points, the first starting point, and the second starting point. A starting point of the single-chain predictive tree is the first starting point, and an ending point is the second starting point.

The following describes an implementation process of constructing the single-chain predictive tree based on the set of alternative points, the first starting point, and the second starting point.

In an implementation, search may be performed in order of the priorities of the plurality of starting points of the target point cloud group, to construct a branch chain on which each starting point resides. Specifically, the following may be included: constructing a first branch chain of the single-chain predictive tree of the target point cloud group based on the first starting point and the set of alternative points, and constructing a second branch chain of the single-chain predictive tree of the target point cloud group based on the second starting point and the set of alternative points; and then connecting the first branch chain and the second branch chain, to obtain the single-chain predictive tree of the target point cloud group, which is specifically: connecting a tail point on the first branch chain with a higher priority to a tail point on the second branch chain with a lower priority, to obtain the single-chain predictive tree of the target point cloud group.

In an optional implementation procedure, ① and ② are included.

① Search, with the first starting point with a higher priority as a search starting point, the set of alternative points for a first candidate point that is at a shortest geometric distance from the first starting point, connect the first candidate point to the first branch chain that uses the first starting point as a head point, and update the set of alternative points based on the first candidate point, where the updating is specifically to delete the first candidate point from the set of alternative points to obtain the updated set of alternative points; search, with the second starting point with a lower priority as a search starting point, the updated set of alternative points for a second candidate point that is at a shortest geometric distance from the second starting point, connect the second candidate point to the second branch chain that uses the second starting point as a head point, and update the updated set of alternative points based on the second candidate point, where the updating is specifically to delete the second candidate point from the updated set of alternative points to obtain the set of alternative points that is updated again; and repeat the foregoing operations until the set of alternative points is an empty set, to obtain the first branch chain and the second branch chain of the single-chain predictive tree of the target point cloud group.

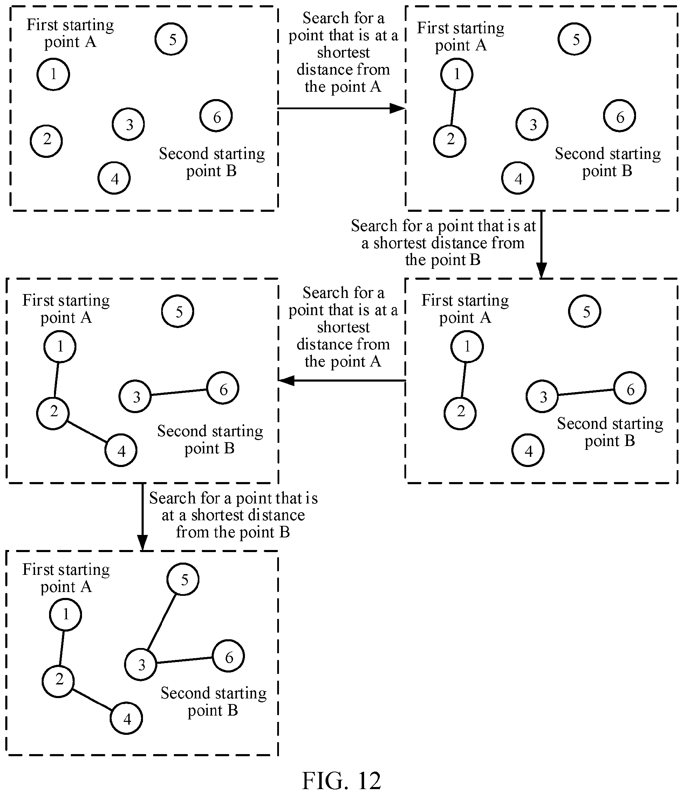

For example, as shown in FIG. 12, it is assumed that to-be-encoded points in a target point cloud group are a point 1, a point 2, a point 3, a point 4, and a point 5. Starting points of the target point cloud group include a first starting point A, which is the point 1, and a second starting point B, which is a point 6 that does not belong to the target point cloud group. Therefore, the to-be-encoded points other than the point 1 in the target point cloud group are determined as candidate points and added to a set of alternative points. In this case, the set of alternative points includes the point 2, the point 3, the point 4, and the point 5. Then, in order of priorities of the starting points, the set of alternative points is searched, first with the first starting point A as a search starting point, for a first candidate point (for example, the point 2) that is at a shortest geometric distance from the first starting point A. Then, the point 2 is connected to the first starting point A to construct a first branch chain, and the first candidate point is deleted from the set of alternative points. After that, the set of alternative points from which the first candidate point is deleted is searched, with the second starting point B as a search starting point, for a second candidate point (for example, the point 3) that is at a shortest geometric distance from the second starting point B. The second candidate point is connected to the second starting point B to construct a second branch chain, and the second candidate point is also deleted from the set of alternative points from which the first candidate point is deleted. In this case, the updated set of alternative points includes the point 4 and the point 5.

Further, the updated set of alternative points is searched, with the first starting point A as a search starting point again, for a third candidate point (for example, the point 4) that is at a shortest geometric distance from the first starting point A. Then, the third candidate point is connected to a current tail point on the first branch chain (that is, the first candidate point) to construct the first branch chain, and the third candidate point is deleted from the updated set of alternative points. Likewise, the updated set of alternative points is searched, with the second starting point B as a search starting point again, for a fourth candidate point (for example, the point 5) that is at a shortest geometric distance from the second starting point B. Because only the point 5 is left in the set of alternative points now, the point 5 may be directly used as the fourth candidate point and connected to a current tail point on the second branch chain (that is, the second candidate point), to construct the second branch chain. The fourth candidate point is deleted from the updated set of alternative points. At this time, the set of alternative points is an empty set. Therefore, the first branch chain that is constructed with the first starting point A as a search starting point is the point 1 → the point 2 → the point 4, and the second branch chain that is constructed with the second starting point B as a search starting point is the point 6 → the point 3 → the point 5.

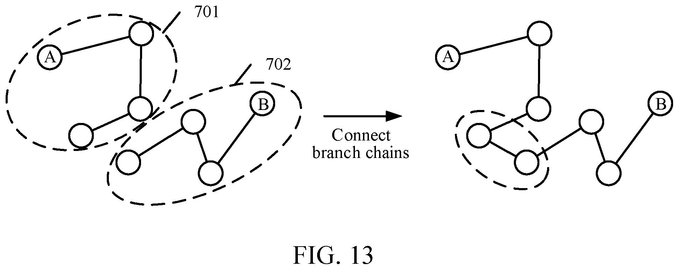

② Connect the first branch chain of the single-chain predictive tree and the second branch chain of the single-chain predictive tree to construct the single-chain predictive tree of the target point cloud group. For a diagram of the connection process, refer to FIG. 13. It is assumed that starting points of a target point cloud group include a starting point A (that is, a first starting point) and a starting point B (that is, a second starting point). First, a set of alternative points is created for the target point cloud group. The set of alternative points does not include the starting points of the target point cloud group. Then, with the starting point A as a search starting point, unconnected to-be-encoded points in the set of alternative points are searched one by one for a point that is at a shortest geometric distance from the starting point A, and the found point is used as a succeeding node of a current point (for example, a point to be connected to a next point on a first branch chain), to obtain the first branch chain 701 with the starting point A as a search starting point. Likewise, with the starting point B as a search starting point, unconnected to-be-encoded points in the set of alternative points are searched one by one for a point that is at a shortest geometric distance from the starting point B, and the found point is used as a succeeding node of a current point, to obtain a second branch chain 702 with the starting point B as a search starting point. Then, a tail point on the first branch chain 701 is connected to a tail point on the second branch chain 702. A predictive tree obtained through the connection is used as a single-chain predictive tree of the target point cloud group. The starting point A (that is, the first starting point) is used as a starting point of the single-chain predictive tree of the target point cloud group, and the starting point B (that is, the second starting point) is used as an ending point of the single-chain predictive tree of the target point cloud group.

In another optional implementation procedure, principles may be briefly described as follows: It is assumed that a current to-be-encoded point in the target point cloud group is i, the first starting point is denoted as A, and the second starting point is denoted as B. In this case, a distance between the current point i and the first starting point A is a weighted sum of a distance between the current point i and the first starting point A and a distance between the current point i and the second starting point B: d1 = a1 × d(i, A) + b1 × d(i, B), where a1 > 0, $b1$ < 0. The weighted sum indicates selecting a point that is closest to the first starting point A and that is farthest from the second starting point B from the set of alternative points, as a succeeding node of the first starting point A. Likewise, a distance between the current point i and the second starting point B is a weighted sum of a distance between the current point i and the first starting point A and a distance between the current point i and the second starting point B: d2 = a2 × d(i, A) + b2 × d(i, B), where a2 < 0, b2 > 0. The weighted sum indicates selecting a point that is closest to the second starting point B and that is farthest from the first starting point A from the set of alternative points, as a succeeding node of the second starting point B. A specific procedure of this implementation may include the following:

First, a first weighted sum of a distance between each candidate point in the set of alternative points and the first starting point and a distance between the candidate point and the second starting point is calculated according to a first calculation rule. The first calculation rule may be d1 = a1 × d(i, A) + b1 × d(i, B).

In the preceding calculation rule, i is a candidate point in the set of alternative points, A is the first starting point of the target point cloud group, B is the second starting point of the target point cloud group, d(i, A) is a geometric distance between the candidate point i and the first starting point A, and d(i, B) is a geometric distance between the candidate point i and the second starting point B. A value of a coefficient a1 is a1>0, and a value of a coefficient b1 is b1<0. To be specific, a larger value of d1 indicates that the candidate point i is closer to the first starting point A and farther from the second starting point B. Therefore, it is determined that an association between the candidate point i and the first starting point A is stronger than an association between the candidate point i and the second starting point B. Specific values of the coefficients a1 and b1 are not limited in this embodiment of this application.

Next, a first candidate point, whose first weighted sum of distances indicates a shortest distance from the first starting point and a longest distance from the second starting point, is added to the first branch chain that uses the first starting point as a head point, that is, the first candidate point is selected as a succeeding node (for example, a point on the first branch chain) of the first starting point. Then, the set of alternative points is updated based on the first candidate point. The updating is specifically to delete the first candidate point from the set of alternative points to obtain the updated set of alternative points.

Likewise, a second weighted sum of a distance between each candidate point in the updated set of alternative points and the first starting point and a distance between the candidate point and the second starting point is calculated according to a second calculation rule. The second calculation rule may be:

$$d2 = a2 \times d(i, A) + b2 \times d(i, B)$$

In the preceding calculation rule, i is a candidate point in the set of alternative points, A is the first starting point of the target point cloud group, B is the second starting point of the target point cloud group, d(i, A) is a geometric distance between the candidate point i and the first starting point A, and d(i, B) is a geometric distance between the candidate point i and the second starting point B. A value of a coefficient a2 is a2<0, and a value of a coefficient b2 is b2>0. To be specific, a larger value of d2 indicates that the candidate point i is farther from the first starting point A and closer to the second starting point B. Therefore, it is determined that an association between the candidate point i and the second starting point B is stronger than an association between the candidate point i and the first starting point A. Specific values of the coefficients a2 and b2 are not limited in this embodiment of this application.

Then, a second candidate point, whose second weighted sum of distances indicates a longest distance from the first starting point and a shortest distance from the second starting point, is added to the second branch chain that uses the second starting point as a head point, that is, the second candidate point is selected as a succeeding node (for example, a point on the second branch chain) of the second starting point. Then, the updated set of alternative points is updated based on the second candidate point. The updating is specifically to delete the second candidate point from the set of alternative points from which the first candidate point is deleted, to obtain the set of alternative points that is updated for a second time.

Finally, the foregoing operations are repeated until the set of alternative points is an empty set, to connect all points in the target point cloud group to the branch chains and to obtain the first branch chain and the second branch chain of the single-chain predictive tree of the target point cloud group.

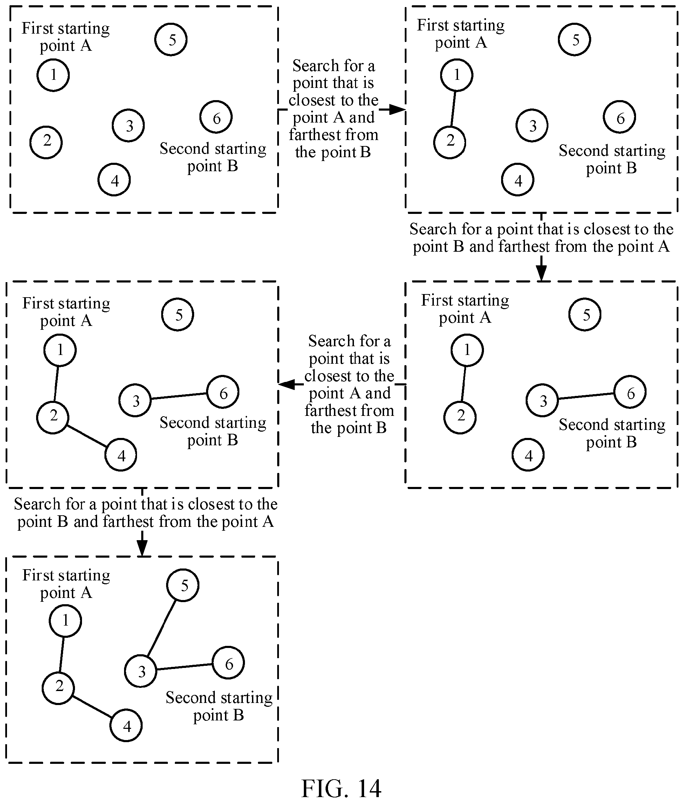

For example, as shown in FIG. 14, it is assumed that to-be-encoded points in a target point cloud group are a point 1, a point 2, a point 3, a point 4, and a point 5. Starting points of the target point cloud group include a first starting point A, which is the point 1, and a second starting point B, which is a point 6 that does not belong to the target point cloud group. Therefore, the to-be-encoded points other than the point 1 in the target point cloud group are determined as candidate points and added to a set of alternative points. In this case, the set of alternative points includes the point 2, the point 3, the point 4, and the point 5. Then, a first weighted sum of a distance between each candidate point in the set of alternative points and the first starting point A and a distance between the candidate point and the second starting point B is calculated according to a first calculation rule. A first candidate point, whose first weighted sum of distances indicates a shortest distance from the first starting point A and a longest distance from the second starting point B, is selected as a succeeding node of the first starting point A. For example, a first weighted sum of distances corresponding to the point 2 is 3, a first weighted sum of distances corresponding to the point 3 is 7, a first weighted sum of distances corresponding to the point 4 is 5, and a first weighted sum of distances corresponding to the point 5 is 10. In this case, the point 5 is selected as a succeeding node of the first starting point A. Then, the first candidate point is deleted from the set of alternative points to update the set of alternative points.

After that, a second weighted sum of a distance between each candidate point in the updated set of alternative points and the first starting point A and a distance between the candidate point and the second starting point B is calculated according to a second calculation rule. A second candidate point, whose second weighted sum of distances indicates a longest distance from the first starting point A and a shortest distance from the second starting point B, is selected as a succeeding node of the second starting point B. For example, a second weighted sum of distances corresponding to the point 2 is 7, a second weighted sum of distances corresponding to the point 3 is 5, and a second weighted sum of distances corresponding to the point 4 is 6. In this case, the point 2 is selected as a succeeding node of the second starting point B. Then, the second candidate point is deleted from the updated set of alternative points to update the set of alternative points. The foregoing operations are repeated until the set of alternative points is an empty set, to obtain a first branch chain that uses the first starting point A as a head point and a second branch chain that uses the second starting point B as a head point.

In another implementation, a plurality of searches may be performed, with the plurality of starting points of the target point cloud group as references, to directly construct the single-chain predictive tree for the target point cloud group.

In an optional implementation procedure, principles of the performing a plurality of searches with the plurality of starting points of the target point cloud group as references may be briefly described as follows: It is assumed that a current to-be-encoded point in the target point cloud group is i, the first starting point is denoted as A, and the second starting point is denoted as B. In this case, a distance between the current point i and the first starting point A is a weighted sum of a distance between the current point i and the first starting point A and a distance between the current point i and the second starting point B: $d1 = a1 \times d(i, A) + b1 \times d(i, B)$, where $a1 > 0, b1 < 0$. The weighted sum indicates selecting a point that is closest to the first starting point A and that is farthest from the second starting point B from the set of alternative points, as a succeeding node of the first starting point A. A weighted sum of distances of any candidate point is a difference between a first weighted value of a distance between the any candidate point and the first starting point and a second weighted value of a distance between the any candidate point and the second starting point. Then, a weighted sum of a distance between each remaining point in the set of alternative points and the first starting point and a distance between the remaining point and the second starting point is calculated. A point, whose weighted sum of distances indicates a shortest distance from the first starting point and a longest distance from the second starting point, is connected to a tail point of the single-chain predictive tree. The foregoing operations are repeated until the set of alternative points is an empty set, to obtain the single-chain predictive tree of the target point cloud group.

A specific procedure of this implementation may include the following: First, a weighted sum of a distance between each candidate point in the set of alternative points and the first starting point and a distance between the candidate point and the second starting point is determined according to a distance calculation rule. The distance calculation rule is $d1 = a1 \times d(i, A) + b1 \times d(i, B)$, where $a1 > 0$, $b1 < 0$. A weighted sum of distances of a point calculated according to the distance calculation rule may be used to indicate selecting a point that is closest to the first starting point A and that is farthest from the second starting point B from the set of alternative points.

Then, in ascending order of the weighted sums of distances, the candidate points in the set of alternative points are connected in sequence, to obtain a candidate point chain. A head point on the candidate point chain is a first candidate point with a smallest weighted sum of distances, and a tail point on the candidate point chain is a second candidate point with a largest weighted sum of distances. Finally, the first candidate point on the candidate point chain is connected to the first starting point, and the second candidate point on the candidate point chain is connected to the second starting point, to obtain the single-chain predictive tree of the target point cloud group.

Certainly, in addition to the implementation described above, that is, first constructing the candidate point chain and then connecting the candidate point chain to the first starting point and the second starting point to construct the single-chain predictive tree for the target point cloud group, the following implementation is also supported in this embodiment of this application: After obtaining the weighted sums of distances of the points in the set of alternative points, first selecting a first point with a smallest weighted sum of distances and connecting the first point to the first starting point; then selecting a second point with a smallest weighted sum of distances from remaining points and connecting the second point to the first point; then selecting a point with a smallest weighted sum of distances from remaining points and connecting the point to the second point; and repeating the foregoing operations until all the points in the set of alternative points are connected, to obtain the single-chain predictive tree of the target point cloud group. A specific implementation process of directly constructing the single-chain predictive tree for the target point cloud group with the plurality of starting points of the target point cloud group as references is not limited in this embodiment of this application, which is described herein.

In another optional implementation procedure, principles of the performing a plurality of searches with the plurality of starting points of the target point cloud group as references may be briefly described as follows: It is assumed that a current to-be-encoded point in the target point cloud group is i, the first starting point is denoted as A, and the second starting point is denoted as B. In this case, a distance between the current point i and the first starting point A is a weighted sum of a distance between the current point i and the first starting point A and a distance between the current point i and the second starting point B: d1 = a1 × d(i, A) + b1 × d(i, B), where a1 > 0, $b$1 < 0. The weighted sum indicates selecting a point that is closest to the first starting point A and that is farthest from the second starting point B from the set of alternative points, as a succeeding node of the first starting point A. Then, a weighted sum of a distance between each remaining point in the set of alternative points and the first candidate point and a distance between the remaining point and the second starting point is calculated. A second candidate point, whose weighted sum of distances indicates a shortest distance from the first candidate point and a longest distance from the second starting point, is connected to the first candidate point. In this way, the single-chain predictive tree is constructed for the target point cloud group.

A specific procedure of this implementation may include the following:

First, with the first starting point as a search starting point, the set of alternative points is searched for the first candidate point that has a smallest weighted sum of a distance between the first candidate point and the search starting point and a distance between the first candidate point and the second starting point. A weighted sum of distances of any candidate point is a difference between a first weighted value of a distance between the any candidate point and the first starting point and a second weighted value of a distance between the any candidate point and the second starting point. A rule for calculating a weighted sum of distances is d1 = a1 × d(i, A) + b1 × d(i, B), where a1 > 0, $b$1 < 0. The first candidate point is connected to the search starting point (that is, the first starting point). The set of alternative points is updated based on the first candidate point. For example, the first candidate point is deleted from the set of alternative points.

Next, with the first candidate point as a new search starting point, the updated set of alternative points is searched for the second candidate point that has a smallest weighted sum of a distance between the second candidate point and the search starting point and a distance between the second candidate point and the second starting point. The second candidate point is connected to the new search starting point, and the set of alternative points is updated based on the second candidate point. Then, with the second candidate point as a new search starting point, searching for a candidate point continues until the set of alternative points is an empty set.

Finally, the last found candidate point is connected to the second starting point, to obtain the single-chain predictive tree of the target point cloud group.

The foregoing is merely a plurality of examples of embodiments of constructing the branch chains provided in embodiments of this application. A purpose thereof is to find an unordered point that is in the target point cloud group and that is at a shortest distance (for example, a geometric distance or a weighted sum of distances) from the first starting point, and find an unordered point that is in the target point cloud group and that is at a shortest distance from the second starting point, to improve an association between adjacent unordered points in three-dimensional space. During actual application, other implementations may alternatively be used to achieve the foregoing purpose. A specific implementation process of constructing the branch chains is not limited in this embodiment of this application.

S404: Encode each to-be-encoded point in the point cloud data based on the single-chain predictive tree of each point cloud group.

After the single-chain predictive tree of each point cloud group in the point cloud data is obtained by performing the foregoing operations S401 to S403, the following is further supported in this embodiment of this application: constructing a target predictive tree for the point cloud data based on the single-chain predictive tree of each point cloud group, to encode each to-be-encoded point in the point cloud data based on the target predictive tree of the point cloud data. Specifically, the single-chain predictive tree of each of the L point cloud groups may be obtained. Then, in an obtaining order of the L point cloud groups, that is, an order in which the L point cloud groups are obtained by dividing the point cloud data, the single-chain predictive trees of the point cloud groups are connected in sequence, to obtain the target predictive tree of the point cloud data. A starting point of the target predictive tree is a first starting point of the first point cloud group of the L point cloud groups, and an ending point of the target predictive tree is an ending point of the Lth point cloud group of the L point cloud groups. Finally, each to-be-encoded point in the point cloud data is encoded based on the target predictive tree.

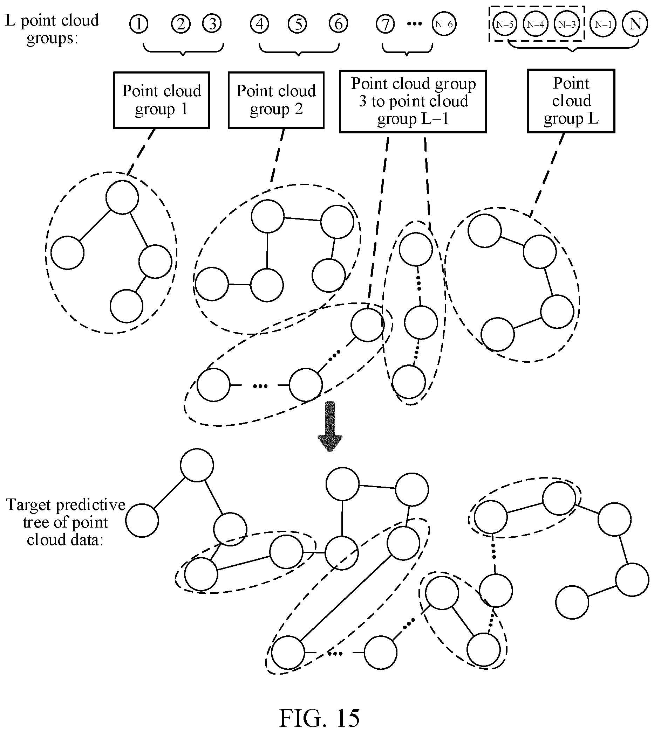

For a diagram of an example process of constructing a target predictive tree for entire point cloud data based on single-chain predictive trees of L point cloud groups, refer to FIG. 15. As shown in FIG. 15, point cloud data includes L point cloud groups, and each point cloud group corresponds to a single-chain predictive tree. The single-chain predictive trees corresponding to the point cloud groups are connected in an order in which the L point cloud groups are obtained through division, to obtain a target predictive tree of the point cloud data. For example, L point cloud groups include a jth point cloud group and a (j+1)th point cloud group that are adjacent to each other, where j=1, 2, ..., L-1. In this case, a tail point (or referred to as an ending point) of a single-chain predictive tree of the jth point cloud group is used as a head point (or referred to as a starting point) of a single-chain predictive tree of the (j+1)th point cloud group, to obtain a target predictive tree of point cloud data.

In this embodiment of this application, after the to-be-encoded point cloud data is obtained, the point cloud data may first be divided into the plurality of point cloud groups, then a single-chain predictive tree is constructed for each point cloud group in units of groups, and finally the predictive tree of the entire point cloud data is obtained based on the single-chain predictive tree of each point cloud group. Compared with constructing a predictive tree for the entire point cloud data, this can help reduce, to some extent, time required for constructing the predictive tree for the point cloud data, increasing efficiency of constructing the predictive tree. In addition, when a single-chain predictive tree is constructed for each point cloud group, two or more starting points may be determined for each point cloud group, and the single-chain predictive tree is constructed for the point cloud group based on the two or more starting points. In the manner of constructing a single-chain predictive tree based on a plurality of starting points, an efficient predictive tree structure can be implemented, associations between adjacent unordered points in the three-dimensional space can be improved, and efficiency of encoding the point cloud data can be increased.

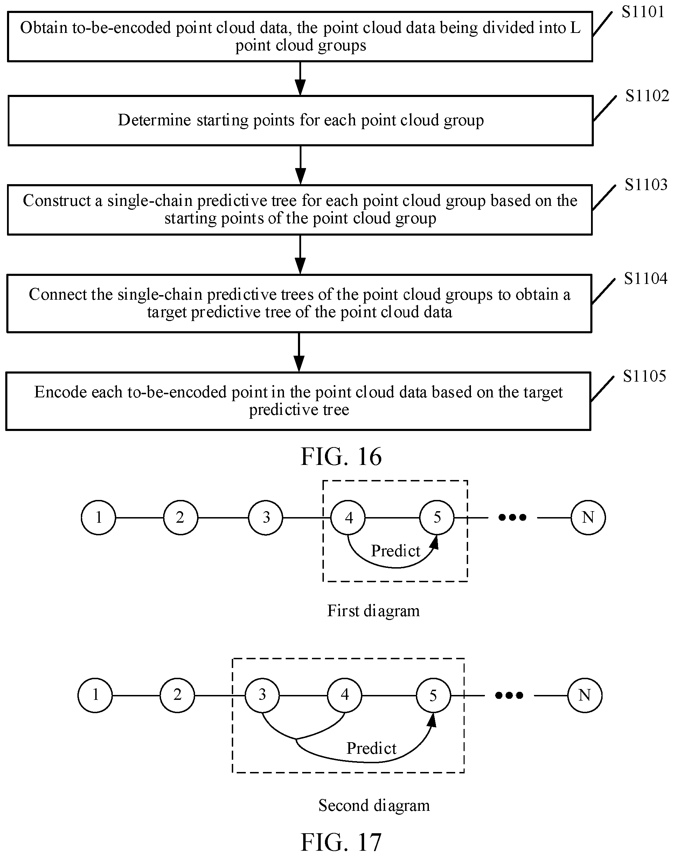

An embodiment of this application provides a point cloud encoding method. For a specific implementation procedure of the point cloud encoding method, refer to FIG. 16. The point cloud encoding method may be performed by the encoding device 301 in the point cloud encoding and decoding system 30 shown in FIG. 5. As shown in FIG. 16, the point cloud encoding method may include the following operations S1101 to S1105:

S1101: Obtain to-be-encoded point cloud data, the point cloud data being divided into L point cloud groups.

S1102: Determine starting points for each point cloud group, a quantity of the starting points of each point cloud group being greater than 1.

S1103: Construct a single-chain predictive tree for each point cloud group based on the starting points of the point cloud group.

S1104: Connect the single-chain predictive trees of the point cloud groups to obtain a target predictive tree of the point cloud data.

For a specific implementation process of operations S1101 to S1104, refer to the related description of the specific implementation process of operations S401 to S404 in the embodiment shown in FIG. 6. Details are not described herein again.

S1105: Encode each to-be-encoded point in the point cloud data based on the target predictive tree.

In this embodiment of this application, an encoding device may encode each to-be-encoded point in the point cloud data by following a plurality of encoding rules, to obtain encoded point cloud data. The encoded point cloud data is an encoded bit stream, which is described herein. For example, bounding box information of a point cloud bounding box of point cloud data may be encoded to obtain encoded point cloud data. For another example, starting point information of a first starting point (for example, real geometry information of a first starting point) of the first point cloud group of point cloud data may be encoded to obtain encoded point cloud data. For still another example, starting point information of starting points of each point cloud group of point cloud data may be encoded to obtain encoded point cloud data. In consideration that the target predictive tree is obtained by connecting the single-chain predictive trees of the L point cloud groups in sequence, a starting point of a point cloud group herein may be an ending point (or referred to as a tail point) of a single-chain predictive tree of a point cloud group that precedes and is adjacent to the point cloud group. For example, a starting point of a $j^{th}$ point cloud group may be an ending point of a single-chain predictive tree of a $(j-1)^{th}$ point cloud group.

The following describes specific implementation processes of the plurality of encoding rules mentioned above. Refer to the following encoding rule 1 to encoding rule 3.

Encoding rule 1: An encoding device may encode bounding box information of a point cloud bounding box that is obtained through space partitioning and that is of entire point cloud data, and encode each to-be-encoded point in the point cloud data, to obtain an encoded bit stream. Then, a decoding end may directly calculate, based on the point cloud bounding box of the point cloud data and space partitioning, starting point information (for example, reconstructed geometry information of starting points) of to-be-decoded point cloud data.

First, the bounding box information of the point cloud bounding box of the point cloud data is determined. The bounding box information may include but is not limited to origin information of the point cloud bounding box and dimensions of the point cloud bounding box in an x-direction, a y-direction, and a z-direction. The bounding box information is encoded to obtain encoded bounding box information. Next, a geometry encoding scheme is determined for a target predictive tree. The geometry encoding scheme defines a method or policy for obtaining predicted geometry information of each to-be-encoded point in the point cloud data. Then, each to-be-encoded point in the point cloud data is encoded based on the geometry encoding scheme, to obtain encoded point cloud data. Finally, the encoded bit stream is obtained based on the encoded bounding box information and the encoded point cloud data.

In addition to encoding the bounding box information of the point cloud bounding box of the entire point cloud data, the following is also supported in this embodiment of this application: encoding bounding box information of a point cloud bounding box of each point cloud group, and encoding each to-be-encoded point in the point cloud data, to obtain encoded point cloud data.

Encoding rule 2: An encoding end may encode starting point information (for example, real geometry information of a starting point) of the first point cloud group of point cloud data, and encode other to-be-encoded points in the point cloud data based on a geometry encoding scheme, to obtain an encoded bit stream. Starting point information of a starting point of a target predictive tree is encoded. The starting point of the target predictive tree herein may be a first starting point of the first point cloud group of L point cloud groups. Starting point information of the first starting point may be real geometry information of the first starting point in a three-dimensional spatial coordinate system. The encoding starting point information of a starting point of a target predictive tree described above includes: encoding the starting point information of the first starting point of the first point cloud group; then determining a geometry encoding scheme for the target predictive tree, and encoding each to-be-encoded point in the point cloud data based on the geometry encoding scheme; and then obtaining the encoded bit stream based on encoded starting point information of the starting point of the target predictive tree and encoded point cloud data.

Encoding rule 3: An encoding end may encode starting point information of a first starting point of a single-chain predictive tree of each point cloud group and group information of each point cloud group (for example, a quantity of points included in a point cloud group, and a group identifier (for example, a group number)), and encode other to-be-encoded points in point cloud data based on a geometry encoding scheme, to obtain encoded point cloud data. In consideration that an ending point of a single-chain predictive tree of a $j^{th}$ point cloud group is used as a first starting point of a single-chain predictive tree of a $(j+1)^{th}$ point cloud group, where j=1, 2, ..., L-1, in a process of connecting the single-chain predictive trees of the plurality of point cloud groups to obtain a target predictive tree of the point cloud data, a first starting point of a single-chain predictive tree mentioned above may be an ending point of a preceding adjacent single-chain predictive tree. For example, a first starting point of an $i^{th}$ group may be an ending point of an $(i-1)^{th}$ group. The encoding device encodes the starting point information of the first starting point of each single-chain predictive tree and the group information of each point cloud group; obtains the geometry encoding scheme for the target predictive tree, and encodes each to-be-encoded point in the point cloud data based on the geometry encoding scheme; and obtains an encoded bit stream based on encoded starting point information of the first starting point of the single-chain predictive tree of each point cloud group, encoded group information of each point cloud group, and the encoded point cloud data.

① The foregoing only provides three example implementation processes of encoding point cloud data. During actual application, other encoding implementations may also be available. This is not limited in this embodiment of this application. ② The specific implementation processes of the foregoing three encoding rules all include a process of encoding each to-be-encoded point in point cloud data based on a geometry encoding scheme obtained for a target predictive tree. The process is specifically encoding prediction residual information of each to-be-encoded point in the point cloud data based on the geometry encoding scheme. An implementation process of encoding each to-be-encoded point in the point cloud data based on the geometry encoding scheme may include: first performing geometry prediction for each to-be-encoded point in the point cloud data based on the geometry encoding scheme obtained for the target predictive tree, to obtain predicted geometry information of each to-be-encoded point in the point cloud data; then determining prediction residual information of each to-be-encoded point in the point cloud data based on the predicted geometry information and real geometry information of each to-be-encoded point in the point cloud data, which is specifically subtracting predicted geometry information of a to-be-encoded point from real geometry information of the to-be-encoded point to obtain prediction residual information of the to-be-encoded point; and finally encoding the prediction residual information of each to-be-encoded point in the point cloud data, to obtain an encoded bit stream.

Geometry encoding schemes (or referred to as prediction schemes) provided in this embodiment of this application may include but are not limited to the following:

(1) Geometry prediction is not performed for a to-be-encoded point.

(2) Geometry prediction is performed for a current to-be-encoded point by using a single preceding node (parent point).

(3) Geometry prediction is performed for a current to-be-encoded point by using S preceding nodes (for example, a parent point and a grandparent point; or a parent point, a grandparent point, and a grand-grandparent point). It is assumed that in a single-chain predictive tree or a target predictive tree, there are Q points that precede a current to-be-encoded point. In this case, a value of S is 2, 3, 4, ..., Q-1.

The following describes specific implementation processes of the several example geometry encoding schemes mentioned above.

(1) For a first starting point in the first position in a target predictive tree, geometry prediction does not need to be performed for the first starting point.

(2) Geometry prediction is performed for a current to-be-encoded point by using a single preceding node. To be specific, predicted geometry information of the current to-be-encoded point may be determined based on a single preceding node (or referred to as a preceding point). It is assumed that point cloud data includes a current to-be-encoded point, and the current to-be-encoded point is any to-be-encoded point other than a head point in a target predictive tree. In this case, a process of performing geometry prediction for the current to-be-encoded point based on a geometry encoding scheme obtained for the target predictive tree, to obtain predicted geometry information of the current to-be-encoded point includes: obtaining real geometry information of a preceding point that precedes and is adjacent to the current to-be-encoded point in the target predictive tree, and using the real geometry information of the preceding point as the predicted geometry information of the current to-be-encoded point. As shown in a first diagram in FIG. 17, it is assumed that a current to-be-encoded point in a target predictive tree of point cloud data is a point 5, and a preceding point that precedes and is adjacent to the point 5 in the target predictive tree is a point 4. In this case, real geometry information of the point 4 is determined as predicted geometry information of the point 5.

(3) Geometry prediction is performed for a current to-be-encoded point by using S preceding nodes. A specific value of S is not limited in this embodiment of this application. To be specific, in this embodiment of this application, predicted geometry information of the current to-be-encoded point may be calculated based on a plurality of preceding nodes. It is assumed that point cloud data includes a current to-be-encoded point, and the current to-be-encoded point is any to-be-encoded point other than a head point in a target predictive tree. In this case, a process of performing geometry prediction for the current to-be-encoded point based on a geometry encoding scheme obtained for the target predictive tree, to obtain predicted geometry information of the current to-be-encoded point includes: obtaining real geometry information of a plurality of preceding points that precede and are adjacent to the current to-be-encoded point in the target predictive tree, and fusing the real geometry information of the plurality of preceding points, to obtain the predicted geometry information of the current to-be-encoded point. A specific fusion process is not limited in this embodiment of this application. For example, fusion may include but is not limited to differential processing or mean calculation. Obtaining two adjacent preceding points is used as an example. As shown in a second diagram in FIG. 17, it is assumed that a current to-be-encoded point in a target predictive tree of point cloud data is a point 5, and two preceding points that precede and are adjacent to the point 5 in the target predictive tree are a point 4 and a point 3. In this case, differential processing may be performed on real geometry information of the point 4 and real geometry information of the point 3, and a differential processing result is determined as predicted geometry information of the point 5.

In addition, the same geometry encoding scheme or different geometry encoding schemes may also be set for a target predictive tree in this embodiment of this application. Manners of setting a geometry encoding scheme for a target predictive tree may include but are not limited to the following:

(1) Consistent geometry encoding schemes are set for point cloud data at an encoding end and a decoding end. In other words, a geometry encoding scheme set for the point cloud data at the encoding end is consistent with a geometry decoding mode set for encoded point cloud data at the decoding end. Specifically, an encoding device and a decoding device may store default setting information. The default setting information indicates setting a default geometry encoding scheme for the point cloud data. Therefore, after the default setting information is obtained, a default geometry encoding scheme is set for the point cloud data based on the default setting information. If the default setting information indicates setting the same geometry encoding scheme for point cloud groups of the point cloud data, the same geometry encoding scheme is used for the point cloud groups. If the default setting information indicates setting different geometry encoding schemes for point cloud groups of the point cloud data, different geometry encoding schemes are used for the point cloud groups. The default setting information may be preset in storage space of the encoding device. In this case, when the encoding device needs to use a geometry encoding scheme for encoding, the encoding device may pull the information directly from the storage space.

In addition, the encoding device may further generate scheme setting information based on the default geometry encoding scheme, and transmit the scheme setting information to the decoding device. The scheme setting information indicates the decoding device to also use a default geometry decoding mode for decoding encoded point cloud data. Alternatively, the default setting information is stored in storage space of the decoding device. In this case, after obtaining to-be-decoded point cloud data, the decoding device may set a default geometry decoding mode for the to-be-decoded point cloud data directly based on the default setting information stored in the storage space.

(2) The same geometry encoding scheme is set for point cloud groups of point cloud data, and scheme information of the geometry encoding scheme is transmitted to a decoding device. Specifically, the scheme information of the geometry encoding scheme is written into a parameter set (for example, encoded header information) or an encoded bit stream, so that the scheme information of the geometry encoding scheme is transmitted to the decoding device when the parameter set or the encoded bit stream is transmitted. Therefore, after receiving the scheme information of the geometry encoding scheme, the decoding device may set a geometry decoding mode for to-be-decoded point cloud data based on the scheme information.

(3) Different geometry encoding schemes are set for point cloud groups of point cloud data, and scheme information of the geometry encoding schemes set for the point cloud groups is transmitted to a decoding device. Specifically, the scheme information of the geometry encoding schemes is written into a parameter set or an encoded bit stream, so that the scheme information of the geometry encoding schemes is transmitted to the decoding device when the parameter set or the encoded bit stream is transmitted. For example, point cloud data includes a first point cloud group and a second point cloud group. A first geometry encoding scheme set for the first point cloud group indicates performing geometry prediction for a current to-be-encoded point by using a single preceding node, and a second geometry encoding scheme set for the second point cloud group indicates performing geometry prediction for a current to-be-encoded point by using S (S is greater than or equal to 2) preceding nodes. In this case, scheme information of the first geometry encoding scheme and scheme information of the second geometry encoding scheme may be transmitted to a decoding device, so that the decoding device sets geometry decoding modes for corresponding to-be-decoded point cloud groups based on the scheme information.

(4) A geometry encoding scheme is determined for a target predictive tree based on geometry distribution characteristics of point cloud data. The geometry distribution characteristics of the point cloud data may include the following: distribution characteristics of dimensions of a point cloud bounding box that is of the point cloud data and that is obtained through space partitioning, in an x-direction, a y-direction, and a z-direction; or distribution characteristics of dimensions of point cloud bounding boxes of point cloud groups of the point cloud data in an x-direction, a y-direction, and a z-direction.

In an implementation, a geometry encoding scheme is determined based on the geometry distribution characteristics of the point cloud bounding box of the point cloud data. Specifically, the point cloud bounding box of the point cloud data is determined first, which is specifically constructing the point cloud bounding box for the point cloud data based on space partitioning. The point cloud bounding box includes all to-be-encoded points in the point cloud data. In the process of determining the point cloud bounding box of the point cloud data, the dimensions of the point cloud bounding box may be determined based on real geometry information of each point in the point cloud data. The dimensions are specifically the dimensions of the point cloud bounding box in the x-direction, the y-direction, and the z-direction. For a specific implementation process of calculating the dimensions of the point cloud bounding box, refer to the related description of the specific implementation process shown in operation S402. Details are not described herein again. If there is a large difference among the dimensions of the point cloud bounding box in the x-direction, the y-direction, and the z-direction, a geometry encoding scheme is determined for the target predictive tree based on the difference. For example, different geometry encoding schemes are set for an x-direction, a y-direction, and a z-direction for a target predictive tree. To be specific, different geometry encoding schemes are used for different directions for point cloud data, which is specifically that different geometry encoding schemes are used for different directions for to-be-encoded points in the point cloud data.

A manner of determining the difference among the dimensions of the point cloud bounding box in the x-direction, the y-direction, and the z-direction may include: subtracting the dimension of the point cloud bounding box in the y-direction from the dimension in the x-direction to obtain a difference, and then subtracting the dimension in the z-direction from the difference, to obtain the difference among the dimensions in the x-direction, the y-direction, and the z-direction. If the difference is greater than a difference threshold, it is determined that the difference among the dimensions of the point cloud bounding box in the x-direction, the y-direction, and the z-direction is large. On the contrary, if the difference is less than or equal to a difference threshold, it is determined that the difference among the dimensions of the point cloud bounding box in the x-direction, the y-direction, and the z-direction is small. A specific implementation process of determining the difference among the dimensions of the point cloud bounding box in the x-direction, the y-direction, and the z-direction is not limited in this embodiment of this application. The subtracting the dimension of the point cloud bounding box in the y-direction from the dimension in the x-direction to obtain a difference, and then subtracting the dimension in the z-direction from the difference described above is merely an example implementation process of determining the difference provided in this embodiment of this application, which is specifically described herein.

In another implementation, geometry encoding schemes are determined based on the geometry distribution characteristics of the point cloud groups of the point cloud data. In other words, in units of point cloud groups, a geometry encoding scheme is determined for each point cloud group based on the geometry distribution characteristics of the corresponding point cloud group. Specifically, the dimensions of the point cloud bounding box of each point cloud group is first analyzed based on real geometry information of to-be-encoded points in the point cloud group of the point cloud data, and then a geometry encoding scheme is set for the point cloud group based on the geometry distribution characteristics of the point cloud bounding box of the point cloud group. For example, any point cloud group of point cloud data is a target point cloud group. Dimensions of a point cloud bounding box of the target point cloud group may be analyzed based on real geometry information of to-be-encoded points in the target point cloud group. If a difference among the dimensions of the bounding box of the target point cloud group in an x-direction, a y-direction, and a z-direction is greater than a difference threshold, different geometry encoding schemes are set for the x-direction, the y-direction, and the z-direction for a single-chain predictive tree of the target point cloud group. To be specific, different geometry encoding schemes are used for different directions for the to-be-encoded points included in the target point cloud group. For a manner of determining the difference among the dimensions of the point cloud bounding box of the target point cloud group in the x-direction, the y-direction, and the z-direction, refer to the foregoing related description. Details are not described herein again.

(5) A geometry encoding scheme is determined based on distance statistics of point cloud data. The distance statistics of the point cloud data may be a sum of geometric distances between a plurality of adjacent points in the point cloud data. Specifically, a sum of geometric distances between a plurality of adjacent points may be calculated. If the sum of the geometric distances is greater than a distance threshold, a specified geometry encoding scheme is set for the point cloud data. For example, a specified geometry encoding scheme indicates performing geometry prediction for a current to-be-encoded point by using S preceding nodes.

The foregoing are several example methods for determining a geometry encoding scheme for a target predictive tree provided in this embodiment of this application, and the example methods do not constitute any limitation on this embodiment of this application.

In conclusion, geometry encoding may be performed on the to-be-encoded points in the point cloud data in this embodiment of this application. Compared with encoding the to-be-encoded points, this can reduce an amount of data to be encoded during geometry information encoding, decrease an amount of compressed data to be transmitted, and further increase efficiency of encoding the point cloud data. In addition, the plurality of geometry encoding schemes are also supported in this embodiment of this application. Therefore, the same geometry encoding scheme or different geometry encoding schemes may be selected depending on a service requirement, optimizing geometry encoding schemes and increasing efficiency of encoding the point cloud data.

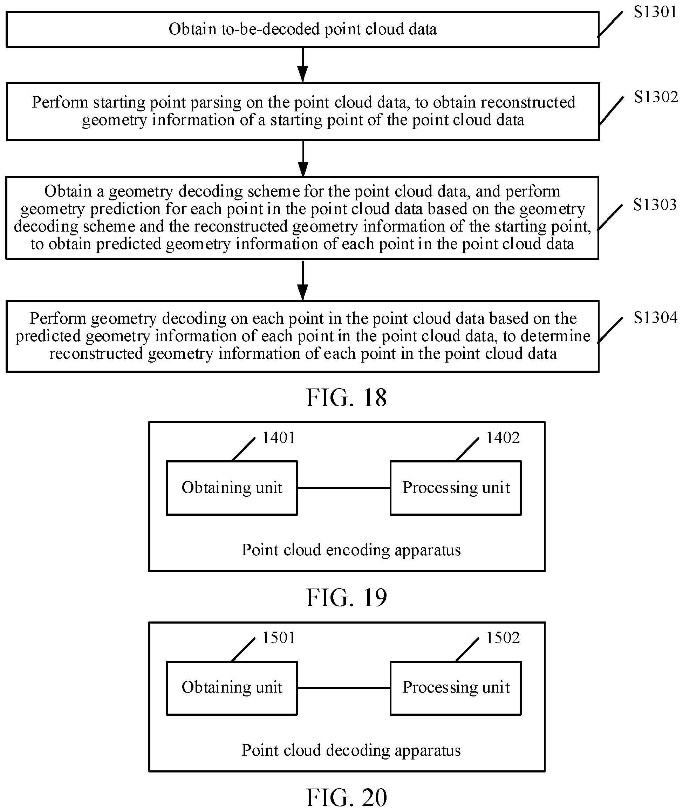

An embodiment of this application provides a point cloud decoding method. For an implementation procedure of the point cloud decoding method, refer to FIG. 18. The point cloud decoding method may be performed by the decoding device 302 in the point cloud encoding and decoding system 30 shown in FIG. 5. As shown in FIG. 18, the point cloud decoding method may include the following operations S1301 to S1304:

S1301: Obtain to-be-decoded point cloud data.

The to-be-decoded point cloud data includes a plurality of to-be-decoded points. The to-be-decoded point cloud data may be encoded point cloud data mentioned above and is an encoded bit stream. The to-be-decoded point cloud data is obtained by encoding each to-be-encoded point in to-be-encoded point cloud data by an encoding device based on a single-chain predictive tree of each point cloud group of the point cloud data. The single-chain predictive tree of each point cloud group is constructed based on starting points of each point cloud group. A quantity of the starting points of each point cloud group is greater than 1. After encoding the point cloud data, the encoding device may transmit the encoded bit stream to a decoding device. In some encoding and decoding scenarios, an encoding device and a decoding device may be the same device. In this case, after encoding point cloud data, the encoding device may store encoded point cloud data into storage space. When the decoding device (that is, the encoding device) needs to decode the encoded point cloud data, the decoding device may obtain to-be-decoded point cloud data directly from the storage space.

S1302: Perform starting point parsing on the point cloud data, to obtain reconstructed geometry information of the starting point of the point cloud data.

As shown in operation S1104 in the embodiment shown in FIG. 16, the encoding device provided in this embodiment of this application may encode each to-be-encoded point in the point cloud data by following a plurality of encoding rules, to obtain an encoded bit stream. For example, bounding box information of a point cloud bounding box of point cloud data may be encoded to obtain an encoded bit stream. For another example, starting point information of a first starting point (for example, real geometry information of a first starting point) of the first point cloud group of point cloud data may be encoded to obtain an encoded bit stream. For still another example, starting point information of starting points of each point cloud group of point cloud data may be encoded to obtain an encoded bit stream. Correspondingly, because different encoding rules are applied to the point cloud data, the decoding device may perform parsing in different manners to obtain the reconstructed geometry information of the starting point of a target predictive tree.

The following describes implementation processes of performing parsing in a plurality of manners to obtain the reconstructed geometry information of the starting point.

In an implementation, encoded bounding box information is parsed, to predict the reconstructed geometry information of the starting point of the point cloud data. The to-be-decoded point cloud data is an encoded bit stream, and the encoded bit stream includes the encoded bounding box information. In this case, the encoded bounding box information may be parsed, to obtain vertex information of vertices of a point cloud bounding box of the point cloud data. Then, based on the vertex information of the vertices of the point cloud bounding box, the reconstructed geometry information of the starting point of the point cloud data may be determined.

For example, encoded bounding box information includes vertex information of a vertex (for example, a bottom-left vertex) of a point cloud bounding box and dimensions of the point cloud bounding box in an x-direction, a y-direction, and a z-direction. In this case, after the encoded bounding box information is parsed, predicted geometry information of one vertex of the point cloud bounding box and the dimensions of the point cloud bounding box in the x-direction, the y-direction, and the z-direction can be directly obtained. In consideration that the point cloud bounding box may be a cuboid or a cube, predicted geometry information of other vertices of the point cloud bounding box can be derived based on the predicted geometry information of one vertex and the dimensions in the x-direction, the y-direction, and the z-direction. Further, because a starting point may be selected from the plurality of vertices of the point cloud bounding box based on starting point selection information, the predicted geometry information of the selected vertex is used as reconstructed geometry information of the starting point. The starting point selection information may be configured to indicate to select P1 vertices from a plurality of vertices of a point cloud bounding box as starting points. The starting point selection information may be stored in the decoding device in a form of a parameter, or may be generated and transmitted to the decoding device by the encoding device after the encoding device selects P1 starting points based on the point cloud bounding box.

If the encoded bounding box information is bounding box information of a point cloud bounding box of each point cloud group of the point cloud data, the bounding box information of the point cloud bounding box of each point cloud group may also be parsed, to obtain vertex information of vertices of each point cloud bounding box. Then, based on the vertex information of the vertices of the point cloud bounding box of each point cloud group, reconstructed geometry information of the starting points of the single-chain predictive tree of each point cloud group is determined. The point cloud groups are obtained by dividing the point cloud data into groups by the encoding device.

In another implementation, encoded starting point information of the starting point of the target predictive tree is parsed, to predict the reconstructed geometry information of the starting point of the point cloud data. During specific implementation, the to-be-decoded point cloud data is an encoded bit stream, the encoded bit stream includes the encoded starting point information of the starting point of the target predictive tree of the point cloud data, the starting point of the target predictive tree may be a first starting point of the first point cloud group of L point cloud groups, L is an integer greater than or equal to 1, and the L point cloud groups are obtained by dividing the point cloud data into groups by an encoding end. In this case, the encoded starting point information of the starting point of the target predictive tree is parsed, and a parsing result may be directly used as the reconstructed geometry information of the starting point of the target predictive tree.

In another implementation, encoded starting point information of a first starting point of a single-chain predictive tree of each point cloud group of the point cloud data is parsed, to predict the reconstructed geometry information of the starting point of the point cloud data. During specific implementation, the to-be-decoded point cloud data is an encoded bit stream, the encoded bit stream includes the encoded starting point information of the first starting point of each single-chain predictive tree, a single-chain predictive tree corresponds to a point cloud group, the point cloud groups are obtained by dividing the point cloud data by an encoding end, and the target predictive tree of the point cloud data is obtained by connecting the single-chain predictive trees of the point cloud groups. In this case, the encoded starting point information of the first starting point of the single-chain predictive tree of each of the L point cloud groups may be directly parsed, a result of parsing the starting point information of the first starting point of each single-chain predictive tree is used as reconstructed geometry information of the starting point of the corresponding point cloud group, and the reconstructed geometry information of the starting point of the point cloud data is determined based on the reconstructed geometry information of the starting point of each point cloud group.

A first starting point of a single-chain predictive tree mentioned above may be an ending point of a preceding adjacent single-chain predictive tree. Based on the foregoing description, the target predictive tree of the point cloud data is obtained by connecting the single-chain predictive trees of the L point cloud groups in sequence. For example, a tail point (or referred to as an ending point) of a single-chain predictive tree of an $i^{th}$ point cloud group is connected to a head point (or referred to as a starting point) of a single-chain predictive tree of an $(i+1)^{th}$ point cloud group, where i=1, 2, ..., L. In this case, the ending point of the single-chain predictive tree of the $i^{th}$ point cloud group is used as a first starting point of the $(i+1)^{th}$ point cloud group. Therefore, after the encoded starting point information of the first starting point of the single-chain predictive tree of each point cloud group is parsed, the reconstructed geometry information of the first starting point of each point cloud group can be directly obtained, enabling subsequent geometry prediction that is performed for other points in the corresponding point cloud group based on the reconstructed geometry information of the first starting point.

Because the encoded point cloud data includes different information, the decoding device may predict the reconstructed geometry information of the starting point of the target predictive tree in different manners. A specific implementation in which the decoding device predicts the reconstructed geometry information of the starting point is not limited in this embodiment of this application.

S1303: Obtain a geometry decoding mode for the target predictive tree, and perform geometry prediction for each point in the point cloud data based on the geometry decoding mode and the reconstructed geometry information of the starting point, to obtain predicted geometry information of each point in the point cloud data.

When the reconstructed geometry information of the starting point is known, geometry prediction may be performed for each point in the point cloud data based on the geometry decoding mode obtained for the point cloud data, to obtain the predicted geometry information of each point. For example, when reconstructed geometry information of the first starting point of a target predictive tree of point cloud data is known, predicted geometry information of other points can be derived in sequence based on the reconstructed geometry information of the first starting point and a geometry decoding mode. For another example, point cloud data includes encoded point quantity of each point cloud group. In this case, after the encoded point quantity of each point cloud group is parsed, predicted point quantity information of each point cloud group can be obtained. Then, based on a geometry decoding mode, the predicted point quantity information of each point cloud group, and known predicted geometry information of a tail point of a single-chain predictive tree of each point cloud group, predicted geometry information of each point in each point cloud group can be determined. In this way, predicted geometry information of each point in the point cloud data is obtained. For an $i^{th}$ point cloud group, predicted geometry information of each point in the $i^{th}$ point cloud group can be derived based on the geometry decoding mode, predicted point quantity information of the $i^{th}$ point cloud group, and predicted geometry information of a tail point of a single-chain predictive tree of an $(i-1)^{th}$ point cloud group. Similar operations may be performed to obtain the predicted geometry information of each point in the point cloud data.

Similar to geometry encoding schemes used by the encoding end, geometry decoding modes used by a decoding end may include but are not limited to the following:

(1) Geometry prediction is not performed for a to-be-decoded point.

(2) Geometry prediction is performed for a current to-be-decoded point by using a single preceding node (parent point).

(3) Geometry prediction is performed for a current to-be-decoded point by using S preceding nodes (for example, a parent point and a grandparent point; or a parent point, a grandparent point, and a grand-grandparent point). It is assumed that in point cloud data or a point cloud group, there are Q points that precede a current to-be-decoded point. In this case, a value of S is 2, 3, 4, ..., Q-1.

The following describes specific implementation processes of the several example geometry decoding modes mentioned above.

(1) For a first starting point in the first position in a target predictive tree, geometry prediction does not need to be performed for the first starting point. It is because predicted geometry information of the first starting point may be obtained by parsing bounding box information described above, or may be obtained by parsing encoded tail point information of a tail point of a single-chain predictive tree, or may be obtained by parsing encoded starting point information of the head point of the target predictive tree.

(2) Geometry prediction is performed for a current to-be-decoded point by using a single preceding node. To be specific, predicted geometry information of the current to-be-decoded point may be determined based on a single preceding node (or referred to as a preceding point). It is assumed that point cloud data includes a current to-be-decoded point, and the current to-be-decoded point is any to-be-decoded point other than a head point in the point cloud data or a point cloud group. In this case, a process of performing geometry prediction for the current to-be-decoded point based on a geometry decoding mode obtained for a target predictive tree, to obtain predicted geometry information of the current to-be-decoded point includes: obtaining predicted geometry information of a single preceding point that precedes and is adjacent to the current to-be-decoded point in a decoding order, and using the predicted geometry information of the preceding point as the predicted geometry information of the current to-be-decoded point. The decoding order is an order in which an encoding end encodes points in to-be-encoded point cloud data. For example, an order in which an encoding device encodes points in to-be-encoded point cloud data is: a point 1 → a point 3 → a point 2 → a point 5 → a point 4. In this case, an order in which a decoding device decodes the points in to-be-decoded point cloud data is determined to be: the point 1 → the point 3 → the point 2 → the point 5 → the point 4.

(3) Geometry prediction is performed for a current to-be-decoded point by using S preceding nodes. A specific value of S is not limited in this embodiment of this application. To be specific, in this embodiment of this application, predicted geometry information of the current to-be-decoded point may be calculated based on a plurality of preceding nodes. It is assumed that point cloud data includes a current to-be-decoded point, and the current to-be-decoded point is any to-be-decoded point other than a head point in the point cloud data or a point cloud group. In this case, a process of performing geometry prediction for the current to-be-decoded point based on a geometry decoding mode obtained for a target predictive tree, to obtain predicted geometry information of the current to-be-decoded point includes: obtaining predicted geometry information of a plurality of preceding points that precede and are adjacent to the current to-be-decoded point in a decoding order, and fusing the predicted geometry information of the plurality of preceding points, to obtain the predicted geometry information of the current to-be-decoded point. A specific fusion process is not limited in this embodiment of this application. For example, fusion may include but is not limited to differential processing or mean calculation.

In addition, the same geometry decoding mode or different geometry decoding modes may also be set for point cloud data in this embodiment of this application. Manners of setting a geometry decoding mode may include but are not limited to the following (1) to (5):

(1) Consistent geometry encoding schemes are set for point cloud data at an encoding end and a decoding end. In other words, a geometry encoding scheme set for the point cloud data at the encoding end is consistent with a geometry decoding mode set for encoded point cloud data at the decoding end. An encoding device and a decoding device may store default setting information. The default setting information indicates setting a default geometry decoding mode for the point cloud data. Therefore, after the default setting information is obtained, a default geometry decoding mode is set for the point cloud data based on the default setting information. In a case in which the point cloud data is divided into a plurality of point cloud groups, if the default setting information indicates setting the same geometry decoding mode for the point cloud groups of the point cloud data, the same geometry decoding mode is used for the point cloud groups; or if the default setting information indicates setting different geometry decoding modes for the point cloud groups of the point cloud data, different geometry decoding modes are used for the point cloud groups. In some embodiments, the default setting information may be preset in storage space of the decoding device. In this case, when the decoding device needs to use a geometry decoding mode, the decoding device may pull the information directly from the storage space. In some embodiments, the default setting information may be alternatively transmitted by the encoding device to the decoding device. To be specific, the decoding device may obtain the default setting information from to-be-decoded point cloud data (or referred to as encoded point cloud data), and set a default geometry decoding mode for a target predictive tree based on the default setting information. The default setting information is set through negotiation between the encoding end and the decoding end.

(2) An encoding scheme set for point cloud data is obtained by parsing a parameter set or an encoded bit stream. When an encoding device sets a same geometry encoding scheme for point cloud groups of point cloud data, and scheme information of the geometry encoding scheme is written into a parameter set or an encoded bit stream, a decoding device may obtain the scheme information from the parameter set or the encoded bit stream, and set a same geometry decoding mode for the point cloud groups of the point cloud data based on the scheme information.

(3) An encoding scheme set for each point cloud group of point cloud data is obtained by parsing a parameter set or an encoded bit stream. When an encoding device sets different geometry encoding schemes for point cloud groups of point cloud data, and scheme information of the geometry encoding schemes set for the point cloud groups is written into a parameter set or an encoded bit stream, a decoding device may set a corresponding geometry decoding mode for each point cloud group based on the received scheme information of the point cloud groups.

(4) A geometry decoding mode is determined for point cloud data based on geometry distribution characteristics of the point cloud data. The geometry distribution characteristics of the point cloud data may include the following: distribution characteristics of dimensions of a point cloud bounding box that is of the point cloud data and that is obtained through space partitioning, in an x-direction, a y-direction, and a z-direction; or distribution characteristics of dimensions of point cloud bounding boxes of point cloud groups of the point cloud data in an x-direction, a y-direction, and a z-direction.

In an implementation, a geometry decoding mode is determined based on the geometry distribution characteristics of the point cloud bounding box of the point cloud data. First, the dimensions of the point cloud bounding box of the point cloud data are determined. The dimensions of the point cloud bounding box of the point cloud data in the x-direction, the y-direction, and the z-direction may be obtained by directly parsing encoded bounding box information. For a specific implementation process of parsing the bounding box information of the point cloud bounding box, refer to the foregoing related description. Details are not described herein again. If there is a large difference among the dimensions of the point cloud bounding box of the point cloud data in the x-direction, the y-direction, and the z-direction, for example, the difference is greater than a difference threshold, different geometry decoding modes are set for the x-direction, the y-direction, and the z-direction for the point cloud data. To be specific, different geometry decoding modes are used for different directions for the point cloud data, which is specifically that different geometry decoding modes are used for different directions for to-be-decoded points in the point cloud data.

A manner of determining the difference among the dimensions of the point cloud bounding box in the x-direction, the y-direction, and the z-direction may include: subtracting the dimension of the point cloud bounding box in the y-direction from the dimension in the x-direction to obtain a difference, and then subtracting the dimension in the z-direction from the difference, to obtain the difference among the dimensions in the x-direction, the y-direction, and the z-direction. If the difference is greater than the difference threshold, it is determined that the difference among the dimensions of the point cloud bounding box in the x-direction, the y-direction, and the z-direction is large. On the contrary, if the difference is less than or equal to the difference threshold, it is determined that the difference among the dimensions of the point cloud bounding box in the x-direction, the y-direction, and the z-direction is small. A specific implementation process of determining the difference among the dimensions of the point cloud bounding box in the x-direction, the y-direction, and the z-direction is not limited in this embodiment of this application. The subtracting the dimension of the point cloud bounding box in the y-direction from the dimension in the x-direction to obtain a difference, and then subtracting the dimension in the z-direction from the difference described above is merely an example implementation process of determining the difference provided in this embodiment of this application, which is specifically described herein.

In another implementation, geometry decoding modes are determined based on the geometry distribution characteristics of the point cloud groups of the point cloud data. In other words, in units of point cloud groups, a geometry decoding mode is determined for each point cloud group based on the geometry distribution characteristics of the corresponding point cloud group. First, the dimensions of the point cloud bounding boxes of the point cloud data are determined. The dimensions of the point cloud bounding boxes of the point cloud data in the x-direction, the y-direction, and the z-direction may be obtained by directly parsing encoded bounding box information. For a specific implementation process of parsing the bounding box information of the point cloud bounding boxes, refer to the foregoing related description. Details are not described herein again. Then, a geometry decoding mode is set for each point cloud group based on the geometry distribution characteristics of the point cloud bounding box of the point cloud group. For example, any point cloud group of point cloud data is a target point cloud group. If a difference among dimensions of a bounding box of the target point cloud group in an x-direction, a y-direction, and a z-direction is greater than a difference threshold, different geometry decoding modes are set for the x-direction, the y-direction, and the z-direction for the target point cloud group. To be specific, different geometry decoding modes are used for different directions for to-be-decoded points included in the target point cloud group. For a manner of determining the difference among the dimensions of the point cloud bounding box of the target point cloud group in the x-direction, the y-direction, and the z-direction, refer to the foregoing related description. Details are not described herein again.

(5) A geometry decoding mode is determined based on distance statistics of point cloud data. The distance statistics of the point cloud data may be a sum of distances between a plurality of adjacent points in the point cloud data. The sum may be specifically a sum of absolute values of reconstructed residual information of a plurality of adjacent points. The reconstructed residual information of each point may be obtained by parsing encoded prediction residual information in an encoded bit stream. In other words, an encoding device may encode prediction residual information of each point, so that a decoding device parses encoded prediction residual information of each point to obtain the reconstructed residual information of each point. A sum of reconstructed residual information of a plurality of adjacent points may be calculated. If the sum of the reconstructed residual information is greater than a distance threshold, a specified geometry decoding mode is set for the point cloud data. For example, a specified geometry decoding mode indicates performing geometry prediction for a current to-be-decoded point by using S preceding nodes.

The foregoing are several example methods for determining a geometry decoding mode provided in this embodiment of this application, and the example methods do not constitute any limitation on this embodiment of this application.

S1304: Perform geometry decoding on each point in the point cloud data based on the predicted geometry information of each point in the point cloud data, to determine reconstructed geometry information of each point in the point cloud data.

In some embodiments, the point cloud data further includes encoded prediction residual information of each point. The prediction residual information of any point is obtained by subtracting the predicted geometry information of the any point from real geometry information of the any point by the encoding device. In this case, after receiving the encoded point cloud data, the decoding device parses the encoded prediction residual information of each point in the point cloud data, to obtain reconstructed residual information of each point. Further, the decoding device may perform geometry decoding on each to-be-decoded point in the point cloud data based on the reconstructed residual information and predicted geometry information of each point, to determine the reconstructed geometry information of each point in the point cloud data. Specifically, the decoding device adds reconstructed residual information and predicted geometry information of any point together, to obtain reconstructed geometry information of the any point.

In this embodiment of this application, after the to-be-decoded point cloud data is obtained, starting point parsing may be performed on the point cloud data, to determine the reconstructed geometry information of the starting point of the target predictive tree of the point cloud data; geometry prediction is then performed for each to-be-decoded point in the point cloud data based on the geometry decoding mode determined for the point cloud data and the reconstructed geometry information of the starting point, to obtain the predicted geometry information of each to-be-decoded point; and geometry decoding is then performed on each point in the point cloud data based on the predicted geometry information of each point in the point cloud data, to determine the reconstructed geometry information of each point in the point cloud data. In the foregoing process, starting point parsing is performed on the point cloud data. Therefore, the reconstructed geometry information of the starting point of the target predictive tree of the point cloud data is directly obtained. In other words, the reconstructed geometry information of the starting point is determined quickly, increasing, to some extent, efficiency of decoding the point cloud data.

The foregoing describes the methods in embodiments of this application in detail. To facilitate better implementation of the foregoing solutions in the embodiments of this application, the following provides apparatuses in embodiments of this application correspondingly.

FIG. 19 is a diagram of a structure of a point cloud encoding apparatus according to an embodiment of this application. The point cloud encoding apparatus may be disposed in a computer device provided in an embodiment of this application. The computer device may be the encoding device mentioned in the foregoing method embodiments. In some embodiments, the point cloud encoding apparatus may be a computer program (including program code) running in a computer device. The point cloud encoding apparatus may be configured to perform corresponding operations in the method embodiment shown in FIG. 6 or FIG. 16. With reference to FIG. 19, the point cloud encoding apparatus may include the following units:

an obtaining unit 1401, configured to obtain to-be-encoded point cloud data, the point cloud data being a set in units of points, the point cloud data being divided into L point cloud groups, L being an integer greater than or equal to 1, and each point cloud group including a plurality of to-be-encoded points; and

a processing unit 1402, configured to determine a starting point for each point cloud group, a quantity of the starting points of each point cloud group being greater than or equal to 1;

the processing unit 1402 being further configured to construct a single-chain predictive tree for each point cloud group based on the starting point of the point cloud group; and

the processing unit 1402 being further configured to encode each to-be-encoded point in the point cloud data based on the single-chain predictive tree of each point cloud group.

In an implementation, a manner of determining the starting points of the point cloud groups includes any one or more of the following:

selecting a starting point from a plurality of vertices of a point cloud bounding box of a point cloud group;

selecting a starting point from one or more first special points in a point cloud group, the first special point being a point that is in the point cloud group and whose geometric distance is greater than a distance threshold; or

selecting a starting point based on an arrangement order of to-be-encoded points in a point cloud group.

In an implementation, the manner of determining the starting points of the point cloud groups includes the selecting a starting point from a plurality of vertices of a point cloud bounding box of a point cloud group, any one of the L point cloud groups is a target point cloud group, and when being configured to select a starting point for the target point cloud group, the processing unit 1402 is specifically configured to:

determine a point cloud bounding box for the target point cloud group, the point cloud bounding box of the target point cloud group including a smallest cuboid, a smallest cube, or a smallest polyhedron that encompasses all points in the target point cloud group; and

select P1 starting points from a plurality of vertices of the point cloud bounding box of the target point cloud group according to a selection rule, P1 being greater than or equal to 1, and

the selection rule including at least one of the following: performing selection randomly, performing selection based on geometric distance relationships between vertices, and performing selection in a preset direction.

In an implementation, the manner of determining the starting points of the point cloud groups includes the selecting a starting point from one or more first special points in a point cloud group,
any one of the L point cloud groups is a target point cloud group, and when being configured to select a starting point for the target point cloud group, the processing unit 1402 is specifically configured to:

determine one or more first special points from a plurality of to-be-encoded points included in the target point cloud group, the first special point including at least one of maximum points, minimum points, and median points of the target point cloud group; and

select P2 starting points from the maximum points, the minimum points, and the median points, P2 being greater than or equal to 1.

In an implementation, the manner of determining the starting points of the point cloud groups includes the selecting a starting point based on an arrangement order of to-be-encoded points in a point cloud group,
any one of the L point cloud groups is a target point cloud group, and when being configured to select a starting point for the target point cloud group, the processing unit 1402 is specifically configured to:

determine one or more second special points based on an arrangement order of to-be-encoded points in the target point cloud group, the second special point including at least one of a head point in the arrangement order and a tail point in the arrangement order; and

select P3 starting points from the one or more second special points, P3 being greater than or equal to 1.

In an implementation, any one of the L point cloud groups is a target point cloud group, and when being configured to select a starting point for the target point cloud group, the processing unit 1402 is specifically configured to:

determine a first starting point for the target point cloud group, the first starting point being determined in any one of the following manners: determined based on a plurality of vertices of a point cloud bounding box of the target point cloud group, or determined from one or more first special points in the target point cloud group, or determined based on an arrangement order of to-be-encoded points in the target point cloud group; and

select a starting point from the points in the target point cloud group based on a geometric positional relationship between the first starting point and each point in the target point cloud group.

In an implementation, the L point cloud groups include an m$^{th}$ point cloud group and an (m+1)$^{th}$ point cloud group, one or more starting points are selected for the m$^{th}$ point cloud group, and when being configured to select a starting point for the (m+1)$^{th}$ point cloud group, the processing unit 1402 is specifically configured to:

select a starting point from the one or more starting points of the mth point cloud group according to a screening rule for the (m+1)$^{th}$ point cloud group,

the screening rule including any one of the following: performing selection randomly, or selecting a starting point with a lowest priority from the one or more starting points of the m$^{th}$ point cloud group.

In an implementation, any one of the L point cloud groups is a target point cloud group, starting points of the target point cloud group include at least a first starting point and a second starting point, and when being configured to construct a single-chain predictive tree for the target point cloud group based on the first starting point and the second starting point, the processing unit 1402 is specifically configured to:

determine points other than the starting points in the target point cloud group as candidate points, and add the candidate points to a set of alternative points; and

construct the single-chain predictive tree for the target point cloud group based on the set of alternative points, the first starting point, and the second starting point,

a starting point of the single-chain predictive tree being the first starting point, and an ending point being the second starting point.

In an implementation, a priority of the first starting point is higher than a priority of the second starting point, and when being configured to construct the single-chain predictive tree for the target point cloud group based on the set of alternative points, the first starting point, and the second starting point, the processing unit 1402 is specifically configured to:

construct a first branch chain of the single-chain predictive tree of the target point cloud group based on the first starting point and the set of alternative points, and construct a second branch chain of the single-chain predictive tree of the target point cloud group based on the second starting point and the set of alternative points; and

connect a tail point on the first branch chain with a higher priority to a tail point on the second branch chain with a lower priority, to obtain the single-chain predictive tree of the target point cloud group.

In an implementation, when being configured to construct a first branch chain of the single-chain predictive tree of the target point cloud group based on the first starting point and the set of alternative points, and construct a second branch chain of the single-chain predictive tree of the target point cloud group based on the second starting point and the set of alternative points, the processing unit 1402 is specifically configured to:

search, with the first starting point with a higher priority as a search starting point, the set of alternative points for a first candidate point that is at a shortest geometric distance from the first starting point, connect the first candidate point to the first branch chain that uses the first starting point as a head point, and update the set of alternative points based on the first candidate point;

search, with the second starting point with a lower priority as a search starting point, the updated set of alternative points for a second candidate point that is at a shortest geometric distance from the second starting point, connect the second candidate point to the second branch chain that uses the second starting point as a head point, and update the updated set of alternative points based on the second candidate point; and

repeat the foregoing operations until the set of alternative points is an empty set, to obtain the first branch chain and the second branch chain of the single-chain predictive tree of the target point cloud group.

In an implementation, a priority of the first starting point is higher than a priority of the second starting point, and when being configured to construct the single-chain predictive tree for the target point cloud group based on the set of alternative points, the first starting point, and the second starting point, the processing unit 1402 is specifically configured to:

search, with the first starting point as a search starting point, the set of alternative points for a first candidate point that has a smallest weighted sum of a distance between the first candidate point and the search starting point and a distance between the first candidate point and the second starting point, connect the first candidate point to the search starting point, and update the set of alternative points based on the first candidate point;

search, with the first candidate point as a new search starting point, the updated set of alternative points for a second candidate point that has a smallest weighted sum of a distance between the second candidate point and the search starting point and a distance between the second candidate point and the second starting point, connect the second candidate point to the new search starting point, and update the set of alternative points based on the second candidate point;

continue to search for a candidate point with the second candidate point as a new search starting point until the set of alternative points is an empty set; and

connect the last found candidate point to the second starting point, to obtain the single-chain predictive tree of the target point cloud group.

In an implementation, the processing unit 1402 is further configured to:

order the plurality of to-be-encoded points included in the point cloud data, to obtain a point cloud sequence; and

add a target quantity of adjacent points to a point cloud group based on an arrangement order of the points in the point cloud sequence, to obtain the L point cloud groups,

when an $(L-1)^{th}$ point cloud group is obtained through division, if a quantity of ungrouped points remaining in the point cloud sequence is less than the target quantity, the remaining ungrouped points being added to an $L^{th}$ point cloud group; or

when an $L^{th}$ point cloud group is obtained through division, if a quantity of ungrouped points remaining in the point cloud sequence is less than the target quantity, the remaining ungrouped points being added to the $L^{th}$ point cloud group.

In an implementation, when being configured to encode each to-be-encoded point in the point cloud data based on the single-chain predictive tree of each point cloud group, the processing unit 1402 is specifically configured to:

connect the single-chain predictive trees of the point cloud groups sequentially in an order in which the L point cloud groups are obtained through division, to obtain a target predictive tree of the point cloud data; and

encode each to-be-encoded point in the point cloud data based on the target predictive tree, to obtain an encoded bit stream,

a starting point of the target predictive tree being a first starting point of the first point cloud group of the L point cloud groups, and an ending point of the target predictive tree being an ending point of the $L^{th}$ point cloud group of the L point cloud groups.

In an implementation, the L point cloud groups include a $j^{th}$ point cloud group and a $(j+1)^{th}$ point cloud group that are adjacent to each other, j=1, 2, ..., L-1, and when being configured to connect the single-chain predictive trees of the point cloud groups sequentially in an order in which the L point cloud groups are obtained through division, to obtain a target predictive tree of the point cloud data, the processing unit 1402 is specifically configured to:
connect a tail point of a single-chain predictive tree of the $j^{th}$ point cloud group to a head point of a single-chain predictive tree of the $(j+1)^{th}$ point cloud group, to obtain the target predictive tree of the point cloud data.
In an implementation, when being configured to encode each to-be-encoded point in the point cloud data based on the target predictive tree, to obtain an encoded bit stream, the processing unit 1402 is specifically configured to:

determine bounding box information of a point cloud bounding box of the point cloud data, and encode the bounding box information;

obtain a geometry encoding scheme for the target predictive tree, and encode each to-be-encoded point in the point cloud data based on the geometry encoding scheme; and

obtain the encoded bit stream based on the encoded bounding box information and the encoded point cloud data.

In an implementation, when being configured to encode each to-be-encoded point in the point cloud data based on the target predictive tree, to obtain an encoded bit stream, the processing unit 1402 is specifically configured to:

encode starting point information of the starting point of the target predictive tree, the starting point of the target predictive tree being the first starting point of the first point cloud group of the L point cloud groups;

obtain a geometry encoding scheme for the target predictive tree, and encode each to-be-encoded point in the point cloud data based on the geometry encoding scheme; and

obtain the encoded bit stream based on the encoded starting point information of the starting point of the target predictive tree and the encoded point cloud data.

In an implementation, an ending point of a single-chain predictive tree of a $j^{th}$ point cloud group in the point cloud data is used as a first starting point of a single-chain predictive tree of a $(j+1)^{th}$ point cloud group, j=1, 2, ..., L-1, and when being configured to encode each to-be-encoded point in the point cloud data based on the target predictive tree, to obtain an encoded bit stream, the processing unit 1402 is specifically configured to:

encode starting point information of the first starting point of each single-chain predictive tree and group information of each point cloud group;

obtain a geometry encoding scheme for the target predictive tree, and encode each to-be-encoded point in the point cloud data based on the geometry encoding scheme; and

obtain the encoded bit stream based on the encoded starting point information of the first starting point of each single-chain predictive tree, the encoded group information of each point cloud group, and the encoded point cloud data.

In an implementation, when being configured to encode each to-be-encoded point in the point cloud data based on the geometry encoding scheme, the processing unit 1402 is specifically configured to:

perform geometry prediction for each point in the point cloud data based on the geometry encoding scheme obtained for the target predictive tree, to obtain predicted geometry information of each point in the point cloud data;

determine prediction residual information of each point in the point cloud data based on the predicted geometry information and real geometry information of each point in the point cloud data; and

encode the prediction residual information of each point in the point cloud data, to obtain the encoded point cloud data.

In an implementation, the point cloud data includes a current to-be-encoded point, the current to-be-encoded point is any to-be-encoded point other than the starting point in the target predictive tree, and
when being configured to perform geometry prediction for the current to-be-encoded point based on the geometry encoding scheme obtained for the target predictive tree, to obtain predicted geometry information of the current to-be-encoded point, the processing unit 1402 is specifically configured to perform at least one of the following:

obtaining real geometry information of a single preceding point that precedes and is adjacent to the current to-be-encoded point in the target predictive tree, and using the real geometry information of the preceding point as the predicted geometry information of the current to-be-encoded point; or

obtaining real geometry information of a plurality of preceding points that precede and are adjacent to the current to-be-encoded point in the target predictive tree, and fusing the real geometry information of the plurality of preceding points, to obtain the predicted geometry information of the current to-be-encoded point.

In an implementation, when being configured to obtain a geometry encoding scheme for the target predictive tree, the processing unit 1402 is specifically configured to:

obtain default setting information, and set a default geometry encoding scheme for the target predictive tree based on the default setting information, the default setting information being set through negotiation between an encoding end and a decoding end; or

set a same geometry encoding scheme for the point cloud groups of the point cloud data, scheme information of the geometry encoding scheme being written into a parameter set or the encoded bit stream; or

set different geometry encoding schemes for the point cloud groups of the point cloud data, scheme information of the geometry encoding schemes being written into a parameter set or the encoded bit stream; or

determine a geometry encoding scheme for the target predictive tree based on geometry distribution characteristics of the point cloud data; or

determine a geometry encoding scheme for the target predictive tree based on distance statistics of the point cloud data.

In an implementation, when being configured to determine a geometry encoding scheme for the target predictive tree based on geometry distribution characteristics of the point cloud data, the processing unit 1402 is specifically configured to:

determine dimensions of the point cloud bounding box of the point cloud data based on real geometry information of each point in the point cloud data; and

determine, if a difference among the dimensions of the point cloud bounding box of the point cloud data in an x-direction, a y-direction, and a z-direction is greater than a difference threshold, a geometry encoding scheme for the target predictive tree based on the difference.

In an implementation, when being configured to determine a geometry encoding scheme for the target predictive tree based on geometry distribution characteristics of the point cloud data, the processing unit 1402 is specifically configured to:

determine dimensions of a point cloud bounding box of the target point cloud group based on real geometry information of each point in the target point cloud group; and

set, if a difference among the dimensions of the bounding box of a target point cloud group in an x-direction, a y-direction, and a z-direction is greater than a difference threshold, different geometry encoding schemes for the x-direction, the y-direction, and the z-direction for a single-chain predictive tree of the target point cloud group.

FIG. 20 is a diagram of a structure of a point cloud decoding apparatus according to an embodiment of this application. The point cloud decoding apparatus may be disposed in a computer device provided in an embodiment of this application. The computer device may be the decoding device mentioned in the foregoing method embodiments. In some embodiments, the point cloud decoding apparatus may be a computer program (including program code) running in a computer device. The point cloud decoding apparatus may be configured to perform corresponding operations in the method embodiment shown in FIG. 18. With reference to FIG. 20, the point cloud decoding apparatus may include the following units:

an obtaining unit 1501, configured to obtain to-be-decoded point cloud data, the point cloud data including a plurality of to-be-decoded points, the to-be-decoded point cloud data being obtained by encoding each to-be-encoded point in to-be-encoded point cloud data by an encoding end based on a single-chain predictive tree of each point cloud group of the point cloud data, the single-chain predictive tree of each point cloud group being constructed based on a starting point of each point cloud group, and a quantity of the starting points of each point cloud group being greater than or equal to 1; and

a processing unit 1502, configured to perform starting point parsing on the point cloud data, to obtain reconstructed geometry information of the starting point of the point cloud data;

the processing unit 1502 being further configured to: determine a geometry decoding mode for the point cloud data, and perform geometry prediction for each point in the point cloud data based on the geometry decoding mode and the reconstructed geometry information of the starting point, to obtain predicted geometry information of each point in the point cloud data; and

the processing unit 1502 being further configured to perform geometry decoding on each point in the point cloud data based on the predicted geometry information of each point in the point cloud data, to determine reconstructed geometry information of each point in the point cloud data.

In an implementation, the to-be-decoded point cloud data is an encoded bit stream, the encoded bit stream includes encoded bounding box information, the encoded bit stream is obtained by encoding each point in the to-be-encoded point cloud data by the encoding end, and when being configured to perform starting point parsing on the point cloud data, to obtain reconstructed geometry information of the starting point of the point cloud data, the processing unit 1502 is specifically configured to:

parse the encoded bounding box information, to obtain vertex information of vertices of a point cloud bounding box of the point cloud data; and

determine the reconstructed geometry information of the starting point of the point cloud data based on the vertex information of the vertices of the point cloud bounding box.

In an implementation, the to-be-decoded point cloud data is an encoded bit stream, the encoded bit stream includes encoded starting point information of a starting point of a target predictive tree of the point cloud data, the encoded bit stream is obtained by encoding each point in the to-be-encoded point cloud data by the encoding end, the starting point of the target predictive tree is a first starting point of the first point cloud group of L point cloud groups, L is an integer greater than or equal to 1, the L point cloud groups are obtained by dividing the point cloud data into groups by the encoding end, and

when being configured to perform starting point parsing on the point cloud data, to obtain reconstructed geometry information of the starting point of the point cloud data, the processing unit 1502 is specifically configured to:

parse the encoded starting point information of the starting point of the target predictive tree of the point cloud data; and

use a parsing result as the reconstructed geometry information of the starting point of the point cloud data.

In an implementation, the to-be-decoded point cloud data is an encoded bit stream, the encoded bit stream includes encoded starting point information of a first starting point of each single-chain predictive tree, the encoded bit stream is obtained by encoding each point in the to-be-encoded point cloud data by the encoding end, a single-chain predictive tree corresponds to a point cloud group, and the point cloud groups are obtained by dividing the point cloud data into groups by the encoding end, and

when being configured to perform starting point parsing on the point cloud data, to obtain reconstructed geometry information of the starting point of the point cloud data, the processing unit 1502 is specifically configured to:

parse the encoded starting point information of the first starting point of each single-chain predictive tree; and

use a result of parsing the starting point information of the first starting point of each single-chain predictive tree, as reconstructed geometry information of the starting point of the corresponding point cloud group.

In an implementation, the encoded bit stream includes encoded group information of each point cloud group, group information of a point cloud group includes at least a quantity of points included in the point cloud group and a group identifier of the point cloud group, and

when being configured to perform geometry prediction for each point in the point cloud data based on the geometry decoding mode and the reconstructed geometry information of the starting point, to obtain predicted geometry information of each point in the point cloud data, the processing unit 1502 is specifically configured to:

parse the encoded group information of each point cloud group, to obtain predicted group information of each point cloud group; and

determine predicted geometry information of each point in each point cloud group based on the geometry decoding mode, the predicted group information of each point cloud group, and the reconstructed geometry information of the starting point of each point cloud group, to obtain the predicted geometry information of each point in the point cloud data.

In an implementation, the point cloud data includes a current to-be-decoded point, the current to-be-decoded point is a to-be-decoded point other than the starting point in the point cloud data, and when being configured to perform geometry prediction for the current to-be-decoded point based on the geometry decoding mode, to obtain predicted geometry information of the current to-be-decoded point, the processing unit 1502 is specifically configured to:

obtain predicted geometry information of a single preceding point that precedes and is adjacent to the current to-be-decoded point in a decoding order, and use the predicted geometry information of the preceding point as the predicted geometry information of the current to-be-decoded point; or

obtain predicted geometry information of a plurality of preceding points that precede and are adjacent to the current to-be-decoded point in a decoding order, and fuse the predicted geometry information of the plurality of preceding points, to obtain the predicted geometry information of the current to-be-decoded point,

the decoding order being an order in which the encoding end encodes points in the to-be-encoded point cloud data.

In an implementation, when being configured to obtain a geometry decoding mode for the point cloud data, the processing unit 1502 is specifically configured to perform at least one of the following:

obtaining default setting information, and setting a default geometry decoding mode for the point cloud data based on the default setting information, the default setting information being set through negotiation between the encoding end and a decoding end; or

parsing scheme information that is in a parameter set or an encoded bit stream, and setting a same geometry decoding mode for the point cloud data based on the scheme information; or

parsing scheme information that is in a parameter set or an encoded bit stream, and setting different geometry decoding modes for the point cloud groups of the point cloud data based on the scheme information, the point cloud groups being obtained by dividing the point cloud data into groups by the encoding end; or

determining a geometry decoding mode for the point cloud data based on geometry distribution characteristics of the point cloud data; or

determining a geometry decoding mode for the point cloud data based on distance statistics of the point cloud data.

In an implementation, an encoded bit stream includes encoded bounding box information, the encoded bit stream is obtained by encoding each point in the to-be-encoded point cloud data by the encoding end, and when being configured to determine a geometry decoding mode for the point cloud data based on geometry distribution characteristics of the point cloud data, the processing unit 1502 is specifically configured to:

parse the encoded bounding box information, to obtain dimensions of a point cloud bounding box of the point cloud data; and

determine, if a difference among the dimensions of the point cloud bounding box of the point cloud data in an x-direction, a y-direction, and a z-direction is greater than a difference threshold, a geometry decoding mode for the point cloud data based on the difference.

In an implementation, an encoded bit stream includes encoded bounding box information of each point cloud group, any point cloud group is a target point cloud group, the encoded bit stream is obtained by encoding each point in the to-be-encoded point cloud data by the encoding end, and when being configured to determine a geometry decoding mode for the point cloud data based on geometry distribution characteristics of the point cloud data, the processing unit 1502 is specifically configured to:

parse the encoded bounding box information of the target point cloud group, to obtain dimensions of a point cloud bounding box of the target point cloud group; and

set, if a difference among the dimensions of the bounding box of the target point cloud group in an x-direction, a y-direction, and a z-direction is greater than a difference threshold, different geometry decoding modes for the x-direction, the y-direction, and the z-direction for the target point cloud group.

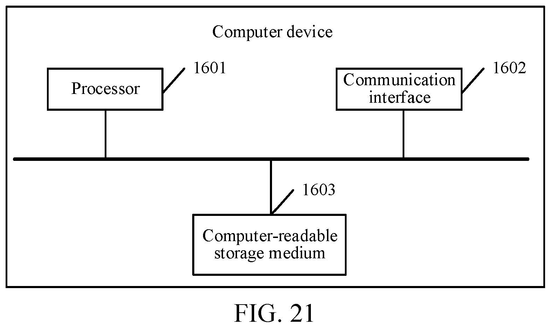

FIG. 21 is a diagram of a structure of a computer device according to an example embodiment of this application. With reference to FIG. 21, the computer device includes a processor 1601, a communication interface 1602, and a computer-readable storage medium 1603. The processor 1601, the communication interface 1602, and the computer-readable storage medium 1603 may be connected by using a bus or in other manners. The communication interface 1602 is configured to receive and transmit data. The computer-readable storage medium 1603 may be stored in a memory in a computer device. The computer-readable storage medium 1603 is configured to store a computer program, with the computer program including program instructions. The processor 1601 is configured to execute the program instructions stored in the computer-readable storage medium 1603. The processor 1601 (or referred to as a central processing unit (CPU)) is a computing core and a control core of a computer device and is suitable to implement one or more instructions. Specifically, the processor 1601 is suitable to load and execute one or more instructions to implement corresponding method procedures or corresponding functions.

An embodiment of this application further provides a computer-readable storage medium (memory). The computer-readable storage medium is a storage device in a computer device and is configured to store programs and data. The computer-readable storage medium herein may include both a storage medium built in the computer device and certainly an extended storage medium supported by the computer device. The computer-readable storage medium provides storage space. In the storage space, a processing system of the computer device is stored. In addition, one or more instructions suitable to be loaded and executed by the processor 1601 are also stored in the storage space. The instructions may be one or more computer programs (including program code). The computer-readable storage medium herein may be a high-speed random access memory (RAM), or may be a non-volatile memory, for example, at least one magnetic disk memory. In some embodiments, the computer-readable storage medium herein may alternatively be at least one computer-readable storage medium located away from the processor.

In an embodiment, the computer-readable storage medium stores one or more instructions. The processor 1601 loads and executes the one or more instructions stored in the computer-readable storage medium, to implement corresponding operations in the foregoing embodiments of the point cloud encoding methods. During specific implementation, the one or more instructions in the computer-readable storage medium are loaded and executed by the processor 1601 to implement the following operations:

obtaining to-be-encoded point cloud data, the point cloud data being divided into L point cloud groups, L being an integer greater than or equal to 1, and each point cloud group including a plurality of to-be-encoded points;

determining a starting point for each point cloud group, a quantity of the starting points of each point cloud group being greater than or equal to 1;

constructing a single-chain predictive tree for each point cloud group based on the starting point of the point cloud group; and

encoding each to-be-encoded point in the point cloud data based on the single-chain predictive tree of each point cloud group.

An embodiment of this application further provides a computer program product or a computer program. The computer program product or the computer program includes computer instructions. The computer instructions are stored in a computer-readable storage medium. A processor in a computer device reads the computer instructions from the computer-readable storage medium. The processor executes the computer instructions, so that the computer device performs the point cloud encoding method or the point cloud decoding method.

**Claims**

1. A point cloud encoding method, performed by an encoding device, comprising:

obtaining to-be-encoded point cloud data, the point cloud data being a set in units of points, the point cloud data being divided into L point cloud groups, L being an integer greater than or equal to 1, and each point cloud group comprising a plurality of to-be-encoded points;
determining a starting point for each point cloud group, a quantity of the starting points of each point cloud group being greater than or equal to 1;
constructing a single-chain predictive tree for each point cloud group based on the starting point of the point cloud group; and
encoding each to-be-encoded point in the point cloud data based on the single-chain predictive tree of each point cloud group.

2. The method according to claim 1, wherein a manner of determining the starting points of the point cloud groups comprises any one or more of the following:

selecting a starting point from a plurality of vertices of a point cloud bounding box of a point cloud group;
selecting a starting point from one or more first special points in a point cloud group, the first special point being a point that is in the point cloud group and whose geometric distance is greater than a distance threshold; or
selecting a starting point based on an arrangement order of to-be-encoded points in a point cloud group.

3. The method according to claim 2, wherein the manner of determining the starting points of the point cloud groups comprises the selecting a starting point from a plurality of vertices of a point cloud bounding box of a point cloud group, any one of the L point cloud groups is a target point cloud group, and selecting a starting point for the target point cloud group comprises:

determining a point cloud bounding box for the target point cloud group, the point cloud bounding box of the target point cloud group comprising a smallest cuboid, a smallest cube, or a smallest polyhedron that encompasses all points in the target point cloud group; and

selecting P1 starting points from a plurality of vertices of the point cloud bounding box of the target point cloud group according to a selection rule, P1 being greater than or equal to 1, and

the selection rule comprising at least one of the following: performing selection randomly, performing selection based on geometric distance relationships between vertices, and performing selection in a preset direction.

4. The method according to claim 2, wherein the manner of determining the starting points of the point cloud groups comprises the selecting a starting point from one or more first special points in a point cloud group, any one of the L point cloud groups is a target point cloud group, and selecting a starting point for the target point cloud group comprises:

determining one or more first special points from a plurality of to-be-encoded points comprised in the target point cloud group, the first special point comprising at least one of maximum points, minimum points, and median points of the target point cloud group; and

selecting P2 starting points from the maximum points, the minimum points, and the median points, P2 being greater than or equal to 1.

5. The method according to claim 2, wherein the manner of determining the starting points of the point cloud groups comprises the selecting a starting point based on an arrangement order of to-be-encoded points in a point cloud group, any one of the L point cloud groups is a target point cloud group, and selecting a starting point for the target point cloud group comprises:

determining one or more second special points based on an arrangement order of to-be-encoded points in the target point cloud group, the second special point comprising at least one of a head point in the arrangement order and a tail point in the arrangement order; and

selecting P3 starting points from the one or more second special points, P3 being greater than or equal to 1.

6. The method according to claim 1, wherein any one of the L point cloud groups is a target point cloud group, and selecting a starting point for the target point cloud group comprises:

determining a first starting point for the target point cloud group, the first starting point being determined in any one of the following manners: determined based on a plurality of vertices of a point cloud bounding box of the target point cloud group, or determined from one or more first special points in the target point cloud group, or determined based on an arrangement order of to-be-encoded points in the target point cloud group; and

selecting a starting point from the points in the target point cloud group based on a geometric positional relationship between the first starting point and each point in the target point cloud group.

7. The method according to claim 1, wherein the L point cloud groups comprise an $m^{th}$ point cloud group and an $(m+1)^{th}$ point cloud group, one or more starting points are selected for the $m^{th}$ point cloud group, and selecting a starting point for the $(m+1)^{th}$ point cloud group comprises:

selecting a starting point from the one or more starting points of the $m^{th}$ point cloud group according to a screening rule for the $(m+1)^{th}$ point cloud group,

the screening rule comprising any one of the following: performing selection randomly, or selecting a starting point with a lowest priority from the one or more starting points of the $m^{th}$ point cloud group.

8. The method according to claim 1, wherein any one of the L point cloud groups is a target point cloud group, starting points of the target point cloud group comprise at least a first starting point and a second starting point, and constructing a single-chain predictive tree for the target point cloud group based on the first starting point and the second starting point comprises:

determining points other than the starting points in the target point cloud group as candidate points, and adding the candidate points to a set of alternative points; and

constructing the single-chain predictive tree for the target point cloud group based on the set of alternative points, the first starting point, and the second starting point,

a starting point of the single-chain predictive tree being the first starting point, and an ending point being the second starting point.

9. The method according to claim 8, wherein a priority of the first starting point is higher than a priority of the second starting point, and the constructing the single-chain predictive tree for the target point cloud group based on the set of alternative points, the first starting point, and the second starting point comprises:

constructing a first branch chain of the single-chain predictive tree of the target point cloud group based on the first starting point and the set of alternative points, and constructing a second branch chain of the single-chain predictive tree of the target point cloud group based on the second starting point and the set of alternative points; and
connecting a tail point on the first branch chain with a higher priority to a tail point on the second branch chain with a lower priority, to obtain the single-chain predictive tree of the target point cloud group.

10. The method according to claim 9, wherein the constructing a first branch chain of the single-chain predictive tree of the target point cloud group based on the first starting point and the set of alternative points, and constructing a second branch chain of the single-chain predictive tree of the target point cloud group based on the second starting point and the set of alternative points comprises:

searching, with the first starting point with a higher priority as a search starting point, the set of alternative points for a first candidate point that is at a shortest geometric distance from the first starting point, connecting the first candidate point to the first branch chain that uses the first starting point as a head point, and updating the set of alternative points based on the first candidate point;
searching, with the second starting point with a lower priority as a search starting point, the updated set of alternative points for a second candidate point that is at a shortest geometric distance from the second starting point, connecting the second candidate point to the second branch chain that uses the second starting point as a head point, and updating the updated set of alternative points based on the second candidate point; and
repeating the foregoing operations until the set of alternative points is an empty set, to obtain the first branch chain and the second branch chain of the single-chain predictive tree of the target point cloud group.

11. The method according to claim 8, wherein a priority of the first starting point is higher than a priority of the second starting point, and the constructing the single-chain predictive tree for the target point cloud group based on the set of alternative points, the first starting point, and the second starting point comprises:

searching, with the first starting point as a search starting point, the set of alternative points for a first candidate point that has a smallest weighted sum of a distance between the first candidate point and the search starting point and a distance between the first candidate point and the second starting point, connecting the first candidate point to the search starting point, and updating the set of alternative points based on the first candidate point;
searching, with the first candidate point as a new search starting point, the updated set of alternative points for a second candidate point that has a smallest weighted sum of a distance between the second candidate point and the search starting point and a distance between the second candidate point and the second starting point, connecting the second candidate point to the new search starting point, and updating the set of alternative points based on the second candidate point;
continuing to search for a candidate point with the second candidate point as a new search starting point until the set of alternative points is an empty set; and
connecting the last found candidate point to the second starting point, to obtain the single-chain predictive tree of the target point cloud group.

12. The method according to claim 1, wherein after the obtaining to-be-encoded point cloud data, the method further comprises:

ordering the plurality of to-be-encoded points comprised in the point cloud data, to obtain a point cloud sequence; and
adding a target quantity of adjacent points to a point cloud group based on an arrangement order of the points in the point cloud sequence, to obtain the L point cloud groups,
when an $(L-1)^{th}$ point cloud group is obtained through division, if a quantity of ungrouped points remaining in the point cloud sequence is less than the target quantity, the remaining ungrouped points being added to an $L^{th}$ point cloud group.

13. The method according to claim 1, wherein after the obtaining to-be-encoded point cloud data, the method further comprises:

ordering the plurality of to-be-encoded points comprised in the point cloud data, to obtain a point cloud sequence; and

adding a target quantity of adjacent points to a point cloud group based on an arrangement order of the points in the point cloud sequence, to obtain the L point cloud groups,

when an $L^{th}$ point cloud group is obtained through division, if a quantity of ungrouped points remaining in the point cloud sequence is less than the target quantity, the remaining ungrouped points being added to the $L^{th}$ point cloud group.

14. The method according to claim 1, 12, or 13, wherein the encoding each to-be-encoded point in the point cloud data based on the single-chain predictive tree of each point cloud group comprises:

connecting the single-chain predictive trees of the point cloud groups sequentially in an order in which the L point cloud groups are obtained through division, to obtain a target predictive tree of the point cloud data; and encoding each to-be-encoded point in the point cloud data based on the target predictive tree, to obtain an encoded bit stream,

a starting point of the target predictive tree being a first starting point of the first point cloud group of the L point cloud groups, and an ending point of the target predictive tree being an ending point of the $L^{th}$ point cloud group of the L point cloud groups.

15. The method according to claim 14, wherein the L point cloud groups comprise a $j^{th}$ point cloud group and a $(j+1)^{th}$ point cloud group, j=1, 2, ..., L-1, and the connecting the single-chain predictive trees of the point cloud groups sequentially in an order in which the L point cloud groups are obtained through division, to obtain a target predictive tree of the point cloud data comprises:

connecting a tail point of a single-chain predictive tree of the $j^{th}$ point cloud group to a head point of a single-chain predictive tree of the $(j+1)^{th}$ point cloud group, to obtain the target predictive tree of the point cloud data.

16. The method according to claim 14, wherein the encoding each to-be-encoded point in the point cloud data based on the target predictive tree, to obtain an encoded bit stream comprises:

determining bounding box information of a point cloud bounding box of the point cloud data, and encoding the bounding box information;

obtaining a geometry encoding scheme for the target predictive tree, and encoding each to-be-encoded point in the point cloud data based on the geometry encoding scheme; and

obtaining the encoded bit stream based on the encoded bounding box information and the encoded point cloud data.

17. The method according to claim 14, wherein the encoding each to-be-encoded point in the point cloud data based on the target predictive tree, to obtain an encoded bit stream comprises:

encoding starting point information of the starting point of the target predictive tree, the starting point of the target predictive tree being the first starting point of the first point cloud group of the L point cloud groups;

obtaining a geometry encoding scheme for the target predictive tree, and encoding each to-be-encoded point in the point cloud data based on the geometry encoding scheme; and

obtaining the encoded bit stream based on the encoded starting point information of the starting point of the target predictive tree and the encoded point cloud data.

18. The method according to claim 14, wherein an ending point of a single-chain predictive tree of a $j^{th}$ point cloud group in the point cloud data is used as a first starting point of a single-chain predictive tree of a $(j+1)^{th}$ point cloud group, j=1, 2, ..., L-1, and the encoding each to-be-encoded point in the point cloud data based on the target predictive tree, to obtain an encoded bit stream comprises:

encoding starting point information of the first starting point of each single-chain predictive tree and group information of each point cloud group;

obtaining a geometry encoding scheme for the target predictive tree, and encoding each to-be-encoded point in the point cloud data based on the geometry encoding scheme; and

obtaining the encoded bit stream based on the encoded starting point information of the first starting point of each single-chain predictive tree, the encoded group information of each point cloud group, and the encoded point cloud data.

19. The method according to any one of claims 16 to 18, wherein the encoding each to-be-encoded point in the point cloud data based on the geometry encoding scheme comprises:

    performing geometry prediction for each point in the point cloud data based on the geometry encoding scheme obtained for the target predictive tree, to obtain predicted geometry information of each point in the point cloud data;
    determining prediction residual information of each point in the point cloud data based on the predicted geometry information and real geometry information of each point in the point cloud data; and
    encoding the prediction residual information of each point in the point cloud data, to obtain the encoded point cloud data.

20. The method according to claim 19, wherein the point cloud data comprises a current to-be-encoded point, the current to-be-encoded point is any to-be-encoded point other than the starting point in the target predictive tree, and a process of performing geometry prediction for the current to-be-encoded point based on the geometry encoding scheme obtained for the target predictive tree, to obtain predicted geometry information of the current to-be-encoded point comprises:
    obtaining real geometry information of a single preceding point that precedes and is adjacent to the current to-be-encoded point in the target predictive tree, and using the real geometry information of the preceding point as the predicted geometry information of the current to-be-encoded point.

21. The method according to claim 19, wherein the point cloud data comprises a current to-be-encoded point, the current to-be-encoded point is any to-be-encoded point other than the starting point in the target predictive tree, and a process of performing geometry prediction for the current to-be-encoded point based on the geometry encoding scheme obtained for the target predictive tree, to obtain predicted geometry information of the current to-be-encoded point comprises:
    obtaining real geometry information of a plurality of preceding points that precede and are adjacent to the current to-be-encoded point in the target predictive tree, and fusing the real geometry information of the plurality of preceding points, to obtain the predicted geometry information of the current to-be-encoded point.

22. The method according to any one of claims 16 to 18, wherein the obtaining a geometry encoding scheme for the target predictive tree comprises:
    obtaining default setting information, and setting a default geometry encoding scheme for the target predictive tree based on the default setting information, the default setting information being set through negotiation between an encoding end and a decoding end.

23. The method according to any one of claims 16 to 18, wherein the obtaining a geometry encoding scheme for the target predictive tree comprises:
    setting a same geometry encoding scheme for the point cloud groups of the point cloud data, scheme information of the geometry encoding scheme being written into a parameter set or the encoded bit stream.

24. The method according to any one of claims 16 to 18, wherein the obtaining a geometry encoding scheme for the target predictive tree comprises:
    setting different geometry encoding schemes for the point cloud groups of the point cloud data, scheme information of the geometry encoding schemes being written into a parameter set or the encoded bit stream.

25. The method according to any one of claims 16 to 18, wherein the obtaining a geometry encoding scheme for the target predictive tree comprises:
    determining a geometry encoding scheme for the target predictive tree based on geometry distribution characteristics of the point cloud data.

26. The method according to any one of claims 16 to 18, wherein the obtaining a geometry encoding scheme for the target predictive tree comprises:
    determining a geometry encoding scheme for the target predictive tree based on distance statistics of the point cloud data.

27. The method according to claim 25, wherein the determining a geometry encoding scheme for the target predictive tree based on geometry distribution characteristics of the point cloud data comprises:

determining dimensions of the point cloud bounding box of the point cloud data based on real geometry information of each point in the point cloud data; and

determining, if a difference among the dimensions of the point cloud bounding box of the point cloud data in an x-direction, a y-direction, and a z-direction is greater than a difference threshold, a geometry encoding scheme for the target predictive tree based on the difference.

28. The method according to claim 25, wherein any point cloud group of the point cloud data is a target point cloud group, and the determining a geometry encoding scheme for the target predictive tree based on geometry distribution characteristics of the point cloud data comprises:

determining dimensions of a point cloud bounding box of the target point cloud group based on real geometry information of each point in the target point cloud group; and

setting, if a difference among the dimensions of the bounding box of the target point cloud group in an x-direction, a y-direction, and a z-direction is greater than a difference threshold, different geometry encoding schemes for the x-direction, the y-direction, and the z-direction for a single-chain predictive tree of the target point cloud group.

29. A point cloud decoding method, performed by a decoding device, comprising:

obtaining to-be-decoded point cloud data, the point cloud data comprising a plurality of to-be-decoded points, the to-be-decoded point cloud data being obtained by encoding each to-be-encoded point based on a single-chain predictive tree of each point cloud group of the point cloud data, the single-chain predictive tree of each point cloud group being constructed based on a starting point of each point cloud group, and a quantity of the starting points of each point cloud group being greater than or equal to 1;

performing starting point parsing on the point cloud data, to obtain reconstructed geometry information of the starting point of the point cloud data;

determining a geometry decoding mode for the point cloud data, and performing geometry prediction for each point in the point cloud data based on the geometry decoding mode and the reconstructed geometry information of the starting point, to obtain predicted geometry information of each point in the point cloud data; and

performing geometry decoding on each point in the point cloud data based on the predicted geometry information of each point in the point cloud data, to determine reconstructed geometry information of each point in the point cloud data.

30. The method according to claim 29, wherein the to-be-decoded point cloud data is an encoded bit stream, the encoded bit stream comprises encoded bounding box information, the encoded bit stream is obtained by encoding each point in the to-be-encoded point cloud data by the encoding end, and the performing starting point parsing on the point cloud data, to obtain reconstructed geometry information of the starting point of the point cloud data comprises:

parsing the encoded bounding box information, to obtain vertex information of vertices of a point cloud bounding box of the point cloud data; and

determining the reconstructed geometry information of the starting point of the point cloud data based on the vertex information of the vertices of the point cloud bounding box.

31. The method according to claim 29, wherein the to-be-decoded point cloud data is an encoded bit stream, the encoded bit stream comprises encoded starting point information of a starting point of a target predictive tree of the point cloud data, the encoded bit stream is obtained by encoding each point in the to-be-encoded point cloud data by the encoding end, the starting point of the target predictive tree is a first starting point of the first point cloud group of L point cloud groups, L is an integer greater than or equal to 1, the L point cloud groups are obtained by dividing the point cloud data into groups by the encoding end, and

the performing starting point parsing on the point cloud data, to obtain reconstructed geometry information of the starting point of the point cloud data comprises:

parsing the encoded starting point information of the starting point of the target predictive tree of the point cloud data; and

using a parsing result as the reconstructed geometry information of the starting point of the point cloud data.

32. The method according to claim 29, wherein the to-be-decoded point cloud data is an encoded bit stream, the encoded bit stream comprises encoded starting point information of a first starting point of each single-chain predictive tree, the encoded bit stream is obtained by encoding each point in the to-be-encoded point cloud data by the encoding end, a single-chain predictive tree corresponds to a point cloud group, and the point cloud groups are obtained by dividing the point cloud data into groups by the encoding end, and

the performing starting point parsing on the point cloud data, to obtain reconstructed geometry information of the starting point of the point cloud data comprises:

parsing the encoded starting point information of the first starting point of each single-chain predictive tree; and using a result of parsing the starting point information of the first starting point of each single-chain predictive tree, as reconstructed geometry information of the starting point of the corresponding point cloud group.

33. The method according to claim 32, wherein the encoded bit stream comprises encoded group information of each point cloud group, group information of a point cloud group comprises at least a quantity of points comprised in the point cloud group and a group identifier of the point cloud group, and

the performing geometry prediction for each point in the point cloud data based on the geometry decoding mode and the reconstructed geometry information of the starting point, to obtain predicted geometry information of each point in the point cloud data comprises:

parsing the encoded group information of each point cloud group, to obtain predicted group information of each point cloud group; and

determining predicted geometry information of each point in each point cloud group based on the geometry decoding mode, the predicted group information of each point cloud group, and the reconstructed geometry information of the starting point of each point cloud group, to obtain the predicted geometry information of each point in the point cloud data.

34. The method according to claim 29, wherein the point cloud data comprises a current to-be-decoded point, the current to-be-decoded point is a to-be-decoded point other than the starting point in the point cloud data, and a process of performing geometry prediction for the current to-be-decoded point based on the geometry decoding mode, to obtain predicted geometry information of the current to-be-decoded point comprises:

obtaining predicted geometry information of a single preceding point that precedes and is adjacent to the current to-be-decoded point in a decoding order, and using the predicted geometry information of the preceding point as the predicted geometry information of the current to-be-decoded point,

the decoding order being an order in which the encoding end encodes points in the to-be-encoded point cloud data.

35. The method according to claim 29, wherein the point cloud data comprises a current to-be-decoded point, the current to-be-decoded point is a to-be-decoded point other than the starting point in the point cloud data, and a process of performing geometry prediction for the current to-be-decoded point based on the geometry decoding mode, to obtain predicted geometry information of the current to-be-decoded point comprises:

obtaining predicted geometry information of a plurality of preceding points that precede and are adjacent to the current to-be-decoded point in a decoding order, and fusing the predicted geometry information of the plurality of preceding points, to obtain the predicted geometry information of the current to-be-decoded point,

the decoding order being an order in which the encoding end encodes points in the to-be-encoded point cloud data.

36. The method according to claim 29, wherein the determining a geometry decoding mode for the point cloud data comprises:

obtaining default setting information, and setting a default geometry decoding mode for the point cloud data based on the default setting information, the default setting information being set through negotiation between the encoding end and a decoding end.

37. The method according to claim 29, wherein the determining a geometry decoding mode for the point cloud data comprises:

obtaining scheme information by parsing a parameter set or an encoded bit stream, and setting a same geometry decoding mode for the point cloud data based on the scheme information.

38. The method according to claim 29, wherein the determining a geometry decoding mode for the point cloud data comprises:

obtaining scheme information by parsing a parameter set or an encoded bit stream, and setting different geometry decoding modes for the point cloud groups of the point cloud data based on the scheme information, the point cloud groups being obtained by dividing the point cloud data into groups by the encoding end.

39. The method according to claim 29, wherein the determining a geometry decoding mode for the point cloud data comprises:
determining a geometry decoding mode for the point cloud data based on geometry distribution characteristics of the point cloud data.

40. The method according to claim 29, wherein the determining a geometry decoding mode for the point cloud data comprises:
determining a geometry decoding mode for the point cloud data based on distance statistics of the point cloud data.

41. The method according to claim 39, wherein an encoded bit stream comprises encoded bounding box information, the encoded bit stream is obtained by encoding each point in the to-be-encoded point cloud data by the encoding end, and the determining a geometry decoding mode for the point cloud data based on geometry distribution characteristics of the point cloud data comprises:

parsing the encoded bounding box information, to obtain dimensions of a point cloud bounding box of the point cloud data; and
determining, if a difference among the dimensions of the point cloud bounding box of the point cloud data in an x-direction, a y-direction, and a z-direction is greater than a difference threshold, a geometry decoding mode for the point cloud data based on the difference.

42. The method according to claim 39, wherein an encoded bit stream comprises encoded bounding box information of each point cloud group, any point cloud group is a target point cloud group, the encoded bit stream is obtained by encoding each point in the to-be-encoded point cloud data by the encoding end, and the determining a geometry decoding mode for the point cloud data based on geometry distribution characteristics of the point cloud data comprises:

parsing the encoded bounding box information of the target point cloud group, to obtain dimensions of a point cloud bounding box of the target point cloud group; and
setting, if a difference among the dimensions of the bounding box of the target point cloud group in an x-direction, a y-direction, and a z-direction is greater than a difference threshold, different geometry decoding modes for the x-direction, the y-direction, and the z-direction for the target point cloud group.

43. A point cloud encoding apparatus, configured in an encoding device, comprising:

an obtaining unit, configured to obtain to-be-encoded point cloud data, the point cloud data being a set in units of points, the point cloud data being divided into L point cloud groups, L being an integer greater than or equal to 1, and each point cloud group comprising a plurality of to-be-encoded points; and
a processing unit, configured to determine a starting point for each point cloud group, a quantity of the starting points of each point cloud group being greater than or equal to 1;
the processing unit being further configured to construct a single-chain predictive tree for each point cloud group based on the starting point of the point cloud group; and
the processing unit being further configured to encode each to-be-encoded point in the point cloud data based on the single-chain predictive tree of each point cloud group.

44. A point cloud decoding apparatus, configured in a decoding device, comprising:

an obtaining unit, configured to obtain to-be-decoded point cloud data, the point cloud data comprising a plurality of to-be-decoded points, the to-be-decoded point cloud data being obtained by encoding each to-be-encoded point in point cloud data by an encoding end based on a single-chain predictive tree of each point cloud group of the point cloud data, the single-chain predictive tree of each point cloud group being constructed based on a starting point of each point cloud group, and a quantity of the starting points of each point cloud group being greater than or equal to 1; and
a processing unit, configured to perform starting point parsing on the point cloud data, to obtain reconstructed geometry information of the starting point of the point cloud data;

the processing unit being further configured to: determine a geometry decoding mode for the point cloud data, and perform geometry prediction for each point in the point cloud data based on the geometry decoding mode and the reconstructed geometry information of the starting point, to obtain predicted geometry information of each point in the point cloud data; and

the processing unit being further configured to perform geometry decoding on each point in the point cloud data based on the predicted geometry information of each point in the point cloud data, to determine reconstructed geometry information of each point in the point cloud data.

**45.** A computer device, the computer device comprising:

a processor, suitable to implement a computer program; and
a computer-readable storage medium, the computer-readable storage medium storing a computer program, and the computer program being suitable to be loaded and executed by the processor to implement the point cloud encoding method according to any one of claims 1 to 28 or the point cloud decoding method according to any one of claims 29 to 42.

**46.** A computer-readable storage medium, the computer-readable storage medium storing a computer program, and the computer program being suitable to be loaded and executed by a processor to implement the point cloud encoding method according to any one of claims 1 to 28 or the point cloud decoding method according to any one of claims 29 to 42.

**47.** A computer program product, the computer program product comprising computer instructions, and the computer instructions, when being executed by a processor, implementing the point cloud encoding method according to any one of claims 1 to 28 or the point cloud decoding method according to any one of claims 29 to 42.

FIG. 1

FIG. 2

Node including three
branches (Branch vertex with
one child)

201

Root node
(Root vertex)

202

Node including two branches
(Branch vertex with
one child)

203

Node including one branch
(Branch vertex with
one child)

Leaf node
(Leaf vertex)

FIG. 3

Root node    204

Leaf node

FIG. 4

30

301

Network

302

FIG. 5

Obtain to-be-encoded point cloud data, the point cloud data being divided into L point cloud groups — S401

Determine starting points for each point cloud group — S402

Construct a single-chain predictive tree for each point cloud group based on the starting points of the point cloud group — S403

Encode each to-be-encoded point in the point cloud data based on the single-chain predictive tree of each point cloud group — S404

**FIG. 6**

Ordering

Point cloud sequence: ① ② ③ ④ ⑤ ⑥ ⑦ ⋯ Ⓝ₋₂ Ⓝ₋₁ Ⓝ

Quantity threshold being 3

When a quantity of remaining points < 3, the remaining points are added to a group

L point cloud groups: ① ② ③ ④ ⑤ ⑥ ⑦ ⋯ Ⓝ₋₂ Ⓝ₋₁ Ⓝ

Point cloud group 1 | Point cloud group 2 | Point cloud group 3 to point cloud group L–1 | Point cloud group L

When a quantity of remaining points < 2×3, the remaining points are added to a previous group

L point cloud groups: ① ② ③ ④ ⑤ ⑥ ⑦ ⋯ Ⓝ₋₆ Ⓝ₋₅ Ⓝ₋₄ Ⓝ₋₃ Ⓝ₋₁ Ⓝ

Point cloud group 1 | Point cloud group 2 | Point cloud group 3 to point cloud group L – 1 | Point cloud group L

**FIG. 7**

| Determine a point cloud bounding box for a target point cloud group | s11 |

| Select a starting point from a plurality of vertices of the point cloud bounding box of the target point cloud group | s12 |

FIG. 8

601    Point cloud bounding box

Point cloud

602

First diagram

601    Point cloud bounding box

Point cloud

602

Second diagram

FIG. 9

| Determine extremum points in a target point cloud group | s21 |

| Select a starting point from the extremum points | s22 |

FIG. 10

| Determine special points based on an arrangement order of to-be-encoded points in a target point cloud group | s31 |

| Select a starting point from the special points | s32 |

FIG. 11

FIG. 12

701

702

Connect
branch chains

FIG. 13

First starting point A
5
1
3
6
2
Second starting point B
4

Search for a point that is closest to the point A and farthest from the point B →

First starting point A
5
1
3
6
2
Second starting point B
4

Search for a point that is closest to the point B and farthest from the point A

First starting point A
5
1
3
6
2
Second starting point B
4

← Search for a point that is closest to the point A and farthest from the point B

First starting point A
5
1
3
6
2
Second starting point B
4

Search for a point that is closest to the point B and farthest from the point A

First starting point A
5
1
3
6
2
Second starting point B
4

FIG. 14

FIG. 15

| Obtain to-be-encoded point cloud data, the point cloud data being divided into L point cloud groups | S1101 |

| Determine starting points for each point cloud group | S1102 |

| Construct a single-chain predictive tree for each point cloud group based on the starting points of the point cloud group | S1103 |

| Connect the single-chain predictive trees of the point cloud groups to obtain a target predictive tree of the point cloud data | S1104 |

| Encode each to-be-encoded point in the point cloud data based on the target predictive tree | S1105 |

FIG. 16

First diagram

Second diagram

FIG. 17

| Obtain to-be-decoded point cloud data | S1301 |

↓

| Perform starting point parsing on the point cloud data, to obtain reconstructed geometry information of a starting point of the point cloud data | S1302 |

↓

| Obtain a geometry decoding scheme for the point cloud data, and perform geometry prediction for each point in the point cloud data based on the geometry decoding scheme and the reconstructed geometry information of the starting point, to obtain predicted geometry information of each point in the point cloud data | S1303 |

↓

| Perform geometry decoding on each point in the point cloud data based on the predicted geometry information of each point in the point cloud data, to determine reconstructed geometry information of each point in the point cloud data | S1304 |

## FIG. 18

```
         1401                    1402
   ┌──────────────┐        ┌──────────────┐
   │ Obtaining unit│────────│Processing unit│
   └──────────────┘        └──────────────┘

        Point cloud encoding apparatus
```

## FIG. 19

```
         1501                    1502
   ┌──────────────┐        ┌──────────────┐
   │ Obtaining unit│────────│Processing unit│
   └──────────────┘        └──────────────┘

        Point cloud decoding apparatus
```

## FIG. 20

Computer device

Processor 1601

Communication interface 1602

Computer-readable storage medium 1603

FIG. 21

## INTERNATIONAL SEARCH REPORT

| International application No. |
|---|
| **PCT/CN2023/079143** |

| A. | CLASSIFICATION OF SUBJECT MATTER |
|---|---|
| | H04L65/60(2022.01)i |

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNKI, CNTXT, ENTXT, ENTXTC, VEN, IEEE: 点云, 初始点, 起始点, 预测树, 划分, 分组, 组, 重构, 重建, 编码, 父, group

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115102935 A (TENCENT TECHNOLOGY (SHENZHEN) CO., LTD.) 23 September 2022 (2022-09-23)<br>description, paragraphs [0004]-[0146] and [0170]-[0621] | 1-47 |
| X | WO 2021182937 A1 (LG ELECTRONICS INC.) 16 September 2021 (2021-09-16)<br>description, paragraphs [0323]-[0435] | 1-47 |
| A | WO 2022015006 A1 (LG ELECTRONICS INC.) 20 January 2022 (2022-01-20)<br>entire document | 1-47 |
| A | WO 2022025552 A1 (LG ELECTRONICS INC.) 03 February 2022 (2022-02-03)<br>entire document | 1-47 |
| A | CN 114598892 A (TENCENT TECHNOLOGY (SHENZHEN) CO., LTD.) 07 June 2022 (2022-06-07)<br>entire document | 1-47 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 April 2023** | **07 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/079143**

| Patent document cited in search report | | | Publication date (day/month/year) | Patent family member(s) | Publication date (day/month/year) |
|---|---|---|---|---|---|
| CN | 115102935 | A | 23 September 2022 | None | |
| WO | 2021182937 | A1 | 16 September 2021 | None | |
| WO | 2022015006 | A1 | 20 January 2022 | None | |
| WO | 2022025552 | A1 | 03 February 2022 | None | |
| CN | 114598892 | A | 07 June 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210690211